# EUROPEAN PATENT APPLICATION

(11) **EP 2 182 729 A1**
(43) Date of publication of application: **05.05.2010**
(21) Application number: 09013486.7
(22) Date of filing: 26.10.2009
(51) Int. Cl.: H04N 7/173

(54) **Content and commercial message delivery system and content information server**

(30) Priority: 31.10.2008 JP 2008280769
(71) Applicant: Hitachi Ltd., Chiyoda-ku Tokyo 100-8280 (JP)
(72) Inventor: Fujihira, Kenji, Tokyo 100-8220 (JP); Matsubara, Daisuke, Tokyo 100-8220 (JP); Takeda, Yukiko, Tokyo 100-8220 (JP)
(74) Representative: Strehl Schübel-Hopf & Partner

(57) **Abstract**

In a content delivery system comprising a content information server (3), a content delivery server (5), and a terminal information server (4) all located within a communications carrier network (N1), the content information server (3) obtains location information of a content requesting terminal (1a-1,1a-2,1b1,1b2,...) from the location information server (4) and generates a play list per terminal (370) for inserting local commercial message content (CM) into main stream content depending on the terminal location. The content delivery server (5) delivers the main stream content and the local commercial message content (CMa) to the requesting terminal according to content identifiers specified in time sequential based on the play list per terminal (370) by the content information server (3).

## Description

### BACKGROUND OF THE INVENTION

### (1) Field of the Invention

The present invention relates to a content delivery system for delivering content such as video over a communication network, and relates in particular to a content and commercial message (CM) delivery system and content information server for inserting CM content into usual content being delivered to a user terminal by a video on demand (VOD) service.

### (2) Description of Related Art

Communication carriers have in recent years started introduction of high-speed, large-capacity next generation networks (NGNs). NGN is a common network infrastructure for multimedia structured on the IP (Internet Protocol) network. NGN can provide such services as video delivery and data communication, in addition to audio communication services through fixed (land-line) telephones or cellular telephones. Because mutual connections among a plurality of service provider networks are indispensable for implementing NGN, standardization works of NGN are proceeding in ITU-T (International Telecommunication Union-Telecommunication Standardization Sector) as the International Organization for Standardization and ETSI (European Telecommunications Standards Institute) as the European Standards Development Organization.

NGN can offer stable high quality video transmission because the communication quality is ensured by a quality of service (QoS) control technology. Accordingly, for example, IP television (IPTV) for providing video delivery services on the IP network has bright prospects on NGN. As IPTV service forms, there exists a broadcast type service for delivering content at predetermined times, and a video on demand (VOD) type service for delivering content at any time in response to a request from a terminal user.

In VOD services, for example, Real Time Streaming Protocol (RTSP) is used as the content playing control protocol, and Real-time Transport Protocol (RTP) as the stream data transfer protocol. RTSP and RTP are communication protocols prescribed by the Internet Engineering Task Force (IETF) and used generally as streaming service protocols.

In VOD services, content delivering technology capable of inserting advertisement content or commercial message (CM) content into main stream content being delivered is required. As prior art technology for inserting CM content into main stream content, for example, Japanese Patent Application Laid-Open Publication No. 2007-96723 (Patent document 1) discloses a content delivery method utilizing CM insertion schedule information (Hereafter referred to as a play list) indicating the order of content play. In the Patent Document 1, the play list is managed by a commercial designation server, and a content delivery server receives the play list from the commercial designation server so that the content delivery server delivers content to each user terminal based on the play list.

On the currently deployed content delivery service "Gyao" (USEN Corporation, "GyaO" : retrieved on May 21, 2008 from http://www.gyao.jp/), a commercial designation server is managed by a VOD service provider operating the content delivery server, for example, as reported in the CISCO SYSTEMS implementation example "Building up a system capable of handling usage by 10 million users in order to deal with a monthly increase of 1 million subscribers": retrieved on May 21, 2008 http://www.cisco.com/web/JP/solution/casestudy/ docs/2005_usen_1122-2.pdf.

### SUMMARY OF THE INVENTION

In order to make delivered CM content suitable for each user in the CM content delivery service described above, play lists prepared for each user are required to define different CM schedules user by user. However, in a system configuration in which the VOD service provider manages the commercial designation server, the VOD service provider has to obtain personal information of each user from a server that manages user personal information, in order to generate a play list for each terminal.

For example in order to begin a local CM delivery service for delivering local commercials of a specific area to a group of terminal users locating in the specific area or its vicinity, the VOD service provider has to obtain location information of a content requesting terminal from a communication carrier managing the location information of each terminal, and then generate a play list for the content requesting terminal based on the location information.

In the Next Generation Network (NGN), however, personal information of terminal users, such as terminal location information necessary for a plurality of VOD service providers is managed by a communication carrier that is quite different entity from the VOD service providers in businesses. In such a case, disclosure of terminal location information from the communication carrier to the VOD service provider poses a problem in terms of safeguarding the terminal user's personal information.

An objective of the present invention is to provide a content and commercial message (CM) delivery system capable of selectively inserting CM content into main stream content requested from each terminal, without leaking terminal information managed by a terminal information server in a communication carrier network to other service provider networks.

Another objective of the present invention is to provide a content information server for controlling a content delivery server so as to deliver main stream content with CM content appropriate to each terminal user, without leaking the terminal information managed by the terminal information server in the communication carrier network to other service provider networks.

In order to achieve the above objectives, the content delivery system of the present invention comprises a content information server, a content delivery server, and a terminal information server for managing terminal information, each of which is located within a communication carrier network, wherein the delivery server delivers main stream content with CM content to each terminal connected to the carrier network, under the content delivery control by the content information server.

More specifically, in the content delivery system of the invention, the content information server comprises: a content information table for storing control information designating a playing order of content within a group of contents, in association with terminal information, for example, location information of terminals, the group of content including CM content, and main stream content or a plurality of sub-contents divided from the main stream content due to inserting the CM content into the main stream content; and request processing means for generating a play list per terminal defining a playing order of content within a group of contents to be delivered to a content requesting terminal, based on terminal information of the content requesting terminal obtained from the terminal information server and the control information stored in association with the obtained terminal information in the content information table, and for notifying the content requesting terminal of content identifiers in time sequential according to the play list per terminal which includes in the playing order a plurality of content information identifiers each of which corresponds to the content identifier of one of CM content specified by the terminal information, the main stream content and sub-contents; and the content delivery server delivers, in accordance with the content identifier designated in a viewing request received from the content requesting terminal, one of the CM content, main stream content and sub-contents to the content requesting terminal.

In the content delivery system of the present invention, for example, the content delivery server has a data storage for storing main stream content having been supplied from a server belonging to a content delivery service provider network other than the communication carrier network and CM content having been supplied from a server belonging to a CM content delivery service provider network other than the communication carrier network, thereby to deliver the main stream content and CM content stored in the data storage to the requesting terminal. In the content information table provided in the content information server, control information inputted from the server in the content delivery service provider network and control information inputted from the server in the CM content delivery service provider network is stored.

In the content delivery system of the present invention, each of terminals is adopted, for example, to selecting a title of content from a Web screen offered from a portal server belonging to the content delivery service provider network, and requesting the content information server to notify a content identifier by designating the selected title, thereby to transmit the viewing request including the content identifier to the content delivery server.

More specifically, in the content delivery system of the present invention, the content information server has a play list per title defining a group of content window identifiers in association with a title identifier of the main stream content, and the content information table comprises a plurality of sub-tables associated with the terminal information, each of the sub-tables comprising a plurality of entries each including a content window identifier and a content information identifier as said control information. In this case, the request processing means is adapted to selecting a group of content window identifiers corresponding to the title identifier specified by the content requesting terminal from the play list per title, selecting a group of content information identifiers specified by the selected group of content window identifiers, from one of sub-tables in the content information table which is specified by the terminal information obtained from the terminal information server, and generating the play list per terminal for the content requesting terminal based on the selected group of content information identifiers.

The play list per title is formed, for example, by transmitting a data entry Web screen from the content information server to a server in the content delivery service provider network, and by entering data through the data entry screen at the service provider's server.

According to an embodiment of the present invention, the content information server maintains the content information table, for example, by transmitting to the server of the content delivery service provider a data entry Web frame having input areas of data items such as identifiers of content windows, designation of commercial insertion window, content information identifiers, and content identifiers, and updating the content information table based on the data items entered through the Web screen and received from the service provider's server. The content information server stores the correspondence of the content information identifier to the content identifier into data storage as content information.

Further, the content information server transmits to a server in the CM content delivery service provider network a data entry Web screen having input areas of data items such as content information identifiers and CM content identifiers, and stores the correspondence of the content information identifier to the CM content identifier entered through the data entry screen and received from the service provider's server into the data storage as CM content information. By referring to the data storage, the content information server can specifies the content identifier to be notified to the requesting terminal, in accordance with a content information identifier when the content information identifier is designated in the play list per terminal.

As described above, the present invention locates the delivery server and the content information server within the communication carrier network to which the terminal information server for managing the terminal information belongs to, so that the content information server generates a play list per terminal capable of selectively delivering CM content to each terminal user by utilizing the terminal information obtained from the terminal information server and, controls the content that the delivery server delivers to each terminal, in accordance with the play list per terminal. According to the content delivery system of the present invention, terminal information as private personal user information is prevented from leaking to outside the carrier network via various servers belonging to content service provider networks other than the communication carrier network.

### BRIEF DESCRIPTION OF DRAWINGS

FIG. 1 shows an example of the structure of Video On Demand (VOD) delivery network to which the present invention is applicable;
FIG. 2 is a block diagram showing an embodiment of a portal server 8 shown in FIG. 1;
FIG. 3 shows the structure of a content information server list per terminal 840 provided in the portal server 8;
FIG. 4 is a block diagram showing an embodiment of a content information server 3 shown in FIG. 1;
FIG. 5 shows an embodiment of the structure of a play list per title 360 provided in the content information server 3;
FIG. 6A shows an embodiment of a content information table 350 provided in the content information server 3;
FIG. 6B shows a modification of table entry in the content information table 350;
FIG. 7 is an embodiment of a play list per terminal 370 generated in the content information server 3;
FIG. 8 is a flow chart showing an embodiment of a play list edit routine 320 to be executed by the content information server 3;
FIG. 9 is a block diagram showing an embodiment of a terminal 1 shown in FIG. 1;
FIG. 10 shows an example of the structure of a terminal location table 400 provided in a terminal information (location information) server 4 shown in FIG. 1;
FIG. 11 is a block diagram showing an embodiment of a content delivery server 5 shown in FIG. 1;
FIG. 12 shows the format of a packet transmitted from the VOD delivery network shown in FIG. 1;
FIG. 13 is a sequence chart showing the first embodiment of content and commercial message (CM) delivery according to the present invention;
FIG. 14 is a flow chart showing an embodiment of a content information server searching routine 830 to be executed by the portal sever 8;
FIG. 15 is a flow chart showing an embodiment of a continuous play routine 1600 to be executed by the terminal 1;
FIG. 16 is a flow chart showing an embodiment of a content information request processing routine 330 to be executed by the content information server 3;
FIG. 17 is a sequence chart showing the second embodiment of the content and CM delivery according to the present invention;
FIG. 18 is a block diagram of the portal server 8 applicable to the second embodiment of the present invention;
FIG. 19 is a flow chart showing an embodiment of a content information server searching routine 830A to be executed by the portal server 8 in the second embodiment;
FIG. 20 is a block diagram of the content information server 3 to be applied to the second embodiment of the present invention;
FIG. 21 shows an example of a portal server list 381 provided in the content information server 3 of the second embodiment;
FIG. 22 is a flow chart of a portal server check routine 380 to be executed by the content information server 3 of the second embodiment;
FIG. 23 is a flow chart of a content information request processing routine 330 to be executed by the content information server 3 of the second embodiment;
FIG. 24 is a block diagram of the content information server 3 to be applied to the third embodiment of the present invention;
FIG. 25 shows an example of a content information table 350 provided in the content information server 3 of the second embodiment;
FIG. 26A shows an example of a play list per terminal 370 generated by the content information server 3 of the second embodiment;
FIG. 26B shows an example of sub-list 371-1 of the play list per terminal 370 in the case where plural local CM were inserted into one main stream content;
FIG. 27 is a block diagram of the content delivery server 5 to be applied to the third embodiment of the present invention;
FIG. 28 shows an example of a CM insert position list 570 provided in the content delivery server 5 of the third embodiment;
FIG. 29A is a part of a sequence chart showing the third embodiment of the content and CM delivery according to the present invention;
FIG. 29B is the remaining part of the sequence chart showing the third embodiment of the content and CM delivery;
FIG. 30 is a flow chart of a CM inserted content delivery routine 560 to be executed by the content delivery server 5 of the third embodiment;
FIG. 31 is a flow chart showing an example of a content ID transmission routine 390 to be executed by the content information server 3 of the third embodiment;
FIG. 32 shows a variation of the content information table 350 provided in the content information server 3.

### DETAILED DESCRIPTION OF PREFERRED EMBODIMENTS

Preferred embodiments of the present invention will be described hereafter by referring to drawings. Description of embodiments will be made about a content and commercial message (CM) delivery system in which location information of each user terminal is used as an example of user terminal information.

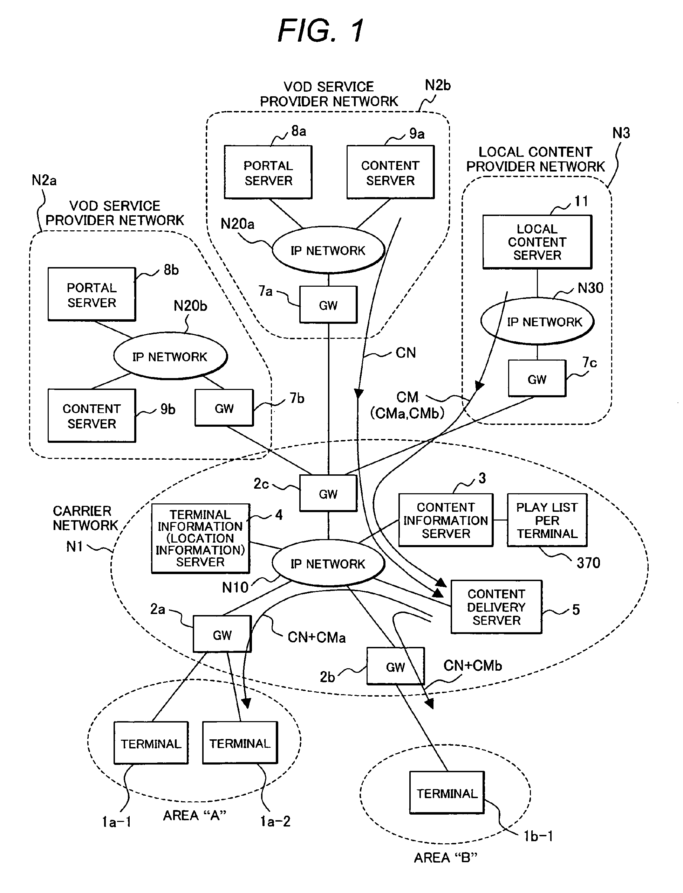

FIG. 1 shows an example of the structure of a VOD delivery network to which the present invention is applicable.

The VOD delivery network shown here comprises a carrier network N1 capable of managing location information of user terminals 1 (1a-1, 1 a-2, 1b-1,---), VOD service provider networks N2 (N2a and N2b) for providing VOD service, and a local content provider network N3 for providing local CM content.

The carrier network N1 includes a content information server 3 connected to the IP network N10, a terminal information (local information) server 4, a content delivery server 5, and a plurality of gateways (GWs) 2. The IP network N10 comprises a plurality of routers or switches. In FIG. 1, a GW 2a for accommodating user terminals (1a-1, 1a-2, ---) in a area A through an access network, a GW 2b for accommodating user terminals (1b-1,---) in a area B through an access network, and a GW 2c for connecting the carrier network N1 to the VOD service provider networks N2 (N2a and N2b) and the local content provider network N3 are indicated as the gateways 2.

According to the present invention, as shown by arrows CN and CM in FIG. 1, various type of contents provided from the content servers 9 (9a, 9b) in the VOD service provider network N2 (N2a, N2b) and CM content provided from the local content server 11 in the local content provider network N3 are stored in the content delivery server 5, so that the content delivery server 5 can perform content delivery service to each user terminal in response to a content viewing request from the terminal.

The content delivery server 5 has a data storage for storing various type of content (hereafter, referred to as main stream content) received from the content servers 9 (9a, 9b) and CM content for each region (hereafter, referred to as local CM content) received from the local content server 11, in association with each content ID. Upon receiving a content viewing request from one of user terminals 1, the content delivery server 5 performs content delivery service so as to insert the local CM content (CMa or CMb) into the requested main stream content CN. The content delivery server 5 is provided with RTSP server function and RTP server function, and the content delivery to the terminal 1 is carried out by RTSP server function.

Upon receiving a packet in the communication between one of the user terminals (hereafter simply referred to as terminals) 1 and one of communication nodes within the carrier network N1, each of GW 2a and GW 2b judges whether the received packet should be transferred or discarded based on the source address of the received packet. In the same way, in communication between one of communication nodes in the service provider network N2 and N3 and one of communication the nodes in the carrier network N1, the GW2c judges whether the received packet should be transferred or discarded based on the source address or destination address of the received packet.

The content delivery from the content delivery server 5 to each terminal is controlled by the content information server 3. In the present invention, the main stream content specified with a title ID by the terminal user is divided into a plurality of blocks (hereafter referred to as sub-contents) due to the insertion of local CM content into the main stream content. In one embodiment of the present invention, the content ID is given to each local CM content and to each sub-content to be the unit of delivery. The content information server 3 manages the content ID as content information to which a content information ID is assigned. The content information is stored in association with control information such as the address of the content delivery server 5 and the content play speed tolerance value.

Each terminal 1 requests, by designating a title ID, the content information server 3 to transmit content information, and transmits a content viewing request to the content delivery server 5 by using the content ID having been received as a part of the content information from the content information server 3. In this way, specific main stream content specified by the content ID is delivered in the form of sub-content or local CM content from the content delivery server 5 to the terminal 1.

In order to insert a special local CM corresponding to the current position of the terminal 1 into the content specified with the title ID by the terminal 1, the content information server 3 has to manage, terminal by terminal, a group of content control information comprising content control information for sub-contents and content control information for local CM content so that the content information server 3 can notify one of content IDs in the correct order to the terminal in response to a content information request received from the terminal. In one embodiment of the present invention, the content information server 3 stores a series of content information IDs in association with the terminal ID of content requesting terminal and the title ID into a play list per terminal 370 as will be described later, and controls the delivery sequence of sub-contents and local CM content for each terminal.

In the case where the terminal 1a-2 and the terminal 1b-1 shown in FIG. 1 have requested delivery of the same title content CN, for example, the content information server 3 notifies the terminals 1a-2 and 1b-1 of difference series of content IDs according to the play list per terminal 370 so that the local CM content (CMa) special to the area A can be inserted into the main stream content CN to be delivered to the terminal 1a-2, and the local CM content (CMb) special to the area B can be inserted into the main stream content CN to be delivered to the terminal 1b-1. In this case, the value of the content information ID of the local CM stored in association with the terminal ID of the terminal 1a-2 and the value of the content information ID of the local CM stored in association with the terminal ID of the terminal 1b-2 are different from each other in the play list per terminal 370.

The terminal information (location information) server 4 stores the location information indicating the current location of each terminal (local ID) in association with the identifier of the terminal (terminal ID). The content information server 3 obtains location information for each terminal from the location information server 4 and generates the play list per terminal 370 by selecting content information corresponding to the current location of the content requesting terminal from among the local CM content information which is previously stored for each local area.

Each of the VOD service provider networks N2 (N2a, N2b) includes a portal server 8 (8a, 8b) and a content server 9 (9a, 9b) connected to the IP network N20 (N20a, N20b), and a GW 7 (7a, 7b) for connecting the VOD service provider network to the GW 2c of the carrier network N1. Upon receiving a packet in the communication between one of communication nodes in the carrier network N1 and one of communication nodes in the VOD service provider network N2, the GW 7 (7a, 7b) judges whether the received packet should be transferred or discarded based on the source address or destination address of the received packet.

The content server 9 (9a, 9b) includes a database for storing content data to be delivered and has the RTSP server function and RTP server function. The content server 9 performs content delivery to the content delivery server 5 and each user terminal 1 according to the RTSP server function. When new content is added to the database, the administrator of the content server 9 operates to deliver the new content to the content delivery server 5 of carrier network N1 and register new content information corresponding to the new content to the content information server 3.

Each of the portal servers 8 (8a, 8b) executes Web service for guiding terminal users to the content to be provided by the content servers 9 (9a, 9b). The terminal user who desires content delivery initially accesses the portal server 8 (8a or 8b) to request for a title list of contents. Upon receiving the title list request from the terminal, the portal server 8 notifies the requesting terminal 1 of the title list (Web page) showing a list of contents provided from the content server 9 (9a or 9b) and the URL of the content information server 3 that executes delivering service of content in the title list.

When the terminal user selects a content title desired to view from the title list, a content information request message is transmitted from the terminal 1 to the content server 3 specified with the URL. The content information request message includes a terminal ID and an identifier (title ID) of the title selected by the terminal user. Upon receiving the content information request message from the terminal 1, the content information server 3 obtains location information (area ID) corresponding to the terminal ID from the location information server 4, and generates a play list per terminal 370 for delivering the requested main stream content and local CM content special to the current location of the requesting terminal. After that, the content information server 3 transmits a response message including content information such as the address of the content delivery server 5, a content ID, and a play speed tolerance value to the requesting terminal 1. Then the terminal 1 can transmit a content viewing request including the content ID to the content delivery server 5 having the address specified by the response message.

The local content provider network N3 includes a local content server 11 connected to the IP network N30 and a GW 7C for connecting the local content provider network N3 to the carrier network N1. Upon receiving a packet in the communication between one of communication nodes in the local content provider network N4 and one of communication nodes in the carrier network N1, the GW 7c judges whether the received packet should be transferred or discarded based on the source address or destination address of the received packet.

The local content server 11 is provided with a database for storing local CM content special to each area corresponding to the local ID, a function of delivering the local CM content to the content delivery server 5 in the carrier network N1, and a function of registering content information corresponding to the local CM content to the content information server 3. Here, the local CM content means such content as advertisements and event guides prepared for terminal users in the specific area or vicinity of the area as service targets.

Each user terminal 1 (1a-1, 1a-2, ---, 1b-1, ---) is a terminal such as an IPTV television installed within the user's home and may be a terminal having a structure of combination of a TV set and a STB (Set Top Box). The user terminal 1 is provided with a browser function of displaying a portal screen, and an audio/video (AV) player function of outputting received video.

In the present invention, the administrator of VOD service provider network N2 (N2a, N2b) operated to send a copy of content data newly stored in the content server 9 to the content delivery server 5, and the administrator of the local content service provider network N3 operates to transmit a copy of content data newly stored in the local content server 11 to the content delivery server 5. By storing these content data in the data storage, the content delivery server 5 can deliver main stream content with local CM content to each terminal.

As the capacity of data storage of the content delivery server 5 is limited, each of administrators of VOD service provider network N2 and the local content provider network N3 deletes old content data from the data storage of the content delivery server 5 so that the content data volume stored in the content delivery server 5 does not exceed a pre-assigned upper limit threshold. However, by giving a time stamp to each of content, for example, old content data may be deleted automatically by the content delivery server 5 according to the time stamp value.

In the present invention, because the content information server 3 for managing the play list per terminal 370, the location information server 4 for managing the location information of each user terminal, and the content delivery server 5 for performing content delivery service instead of the content servers 9 (9a, 9b) in the VOD service provider network, are all located within the same carrier network N1, it is able to provide delivery service of main stream content and local CM content without leaking terminal location information which is privacy information for each user to servers in the other provider networks outside the carrier network N1.

### First Embodiment

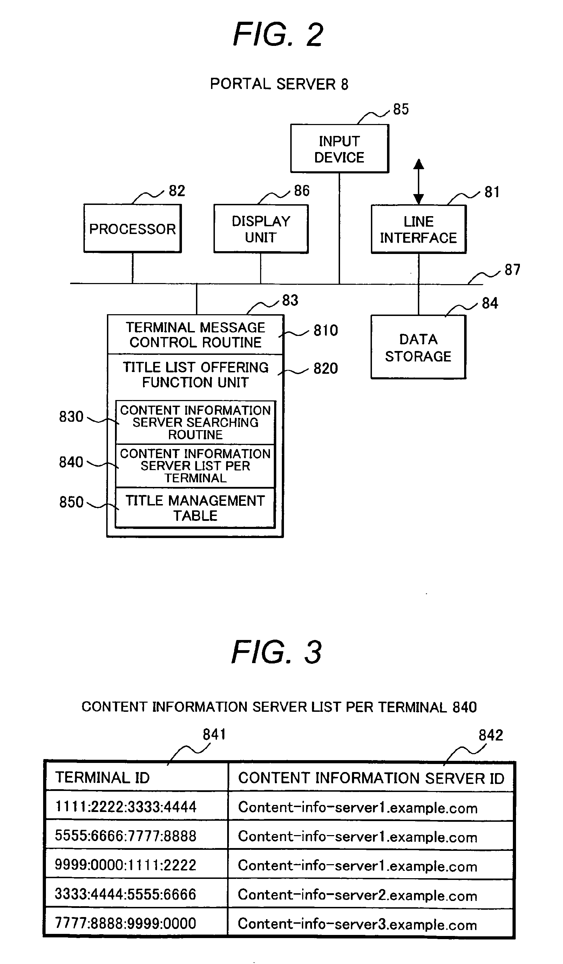

The first embodiment of the present invention will be described with reference to FIG. 2 through FIG. 16.

FIG. 2 is a block diagram showing an embodiment of the portal server 8 (8a, 8b). The portal server 8 comprises a line interface 81 for connecting with the IP network N20 (20a, 20b), a processor (CPU) 82, a memory 83, an external data storage 84, an input device 85, a display unit 86, and a bus 87 for mutually connecting these elements. In the memory 83, a terminal message control routine 810 for controlling the transmission and reception of messages with each user terminal 1, and a title list offering function unit 820 are stored as programs relating to the invention, each of which is executed by the processor 82.

The title list offering function unit 820 includes a content information server searching routine 830, a content information server list per terminal 840, and a title management table 850. The content information server list per terminal 840 and the title management table 850 may be formed in the data storage 84.

As shown in FIG. 3, the content information server list per terminal 840 comprises a plurality of table entries each indicating the correspondence between an identifier (terminal ID) 841 of a terminal subscribing to the content delivery service and a content information server ID 842. AS the terminal ID 841, an identifier for identifying the user terminal 1, for example, an IP address assigned to each terminal is stored. The content information server ID 842 indicates an identifier of the content information server 3 locating in the carrier network N1 to which the user terminal is connected, and URL of the content information server 3, for example, is stored as the content information server ID 842. The entries of the content information server list per terminal 840 is set from the input device 85 by the VOD service provider, for example, an administrator of VOD service network provider N2.

In FIG. 1, the VOD service provider networks N2a and N2b are connected to one carrier network N1. In the present invention, however, it is able to provide VOD service to user terminals even in a network configuration where the VOD service provider networks N2a and N2b are connected to a plurality of carrier networks because each of portal servers 8 can manage plural group of terminals belonging to different content information servers independently by using the content information server list per terminal 840.

The title management table 850 indicates the relation between title information and a title ID of content to be delivered by the content server 9 belonging to the same VOD service provider network N2 as the portal server 8.

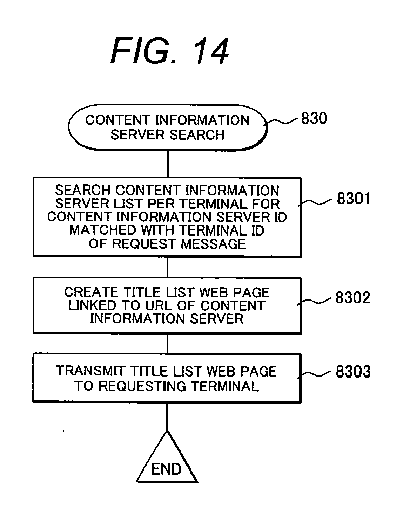

Upon receiving a Web screen request for selecting a content title from the user terminal 1, the content information server searching routine 830 is executed to search the content information server list per terminal 840 for the content information server 3 corresponding to the requesting user terminal, and to notify the requesting terminal 1 of the address of the content information server 3 together with a content title selection screen. The detail of the content information server searching routine 830 will be described later by referring to FIG. 14.

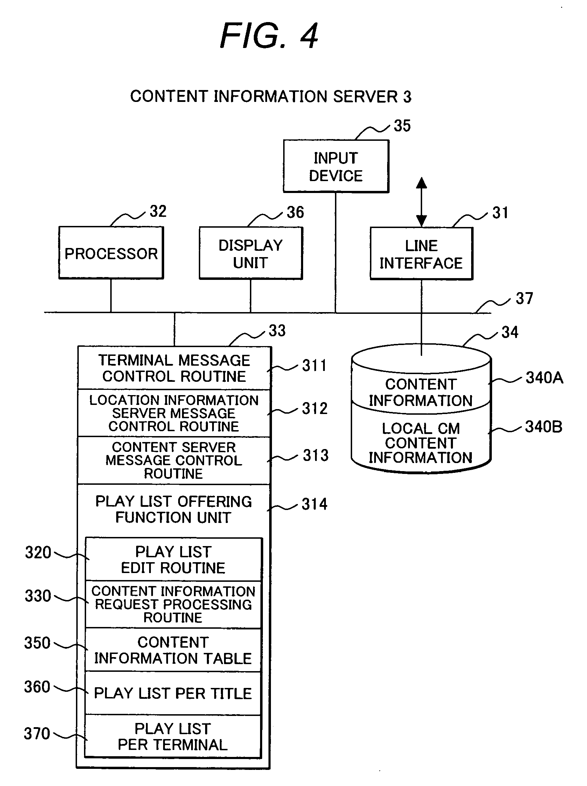

FIG. 4 is a block diagram showing a structural example of the content information server 3. The content information server 3 comprises a line interface 31 for connecting to the IP network N10, a processor 32, a memory 33, a data storage 34 for storing content information 340 as a main stream content information file 340A and a local CM content information file 340B, an input device 35, display unit 36, and a bus 37 for mutually connecting these elements.

In this embodiment, content information 340 indicates the content ID, the address of the content delivery server 5 for delivering the content specified by the content ID to each terminal, and a tolerance value of content play speed. The content information of usual main stream content provided by the content servers 9 (9a, 9b) in the VOD service provider network N2 is stored in the content information file 340A, and the content information of local CM content provided by the local content server 11 is stored in association with the area ID in the local CM content information file 340B. The content information in the information files 340A and 340B is accessed based on the content information ID.

In the memory 33, a terminal message control routine 311 for controlling the transmission and reception of messages with the terminal 1, a location information server message control routine 312 for controlling the transmission and reception of messages with the location information server 4, a content server message control routine 313 for controlling the transmission and reception of messages with the local content server 11 and the content server 9, and a play list offering function unit 314 are prepared as software (program and data table) relating to the present invention, each of which is executed or maintained by the processor 32.

The play list offering function unit 314 includes a play list edit routine 320, a content information request processing routine 330, a content information table 350, a play list per title 360, and a play list per terminal 370. The content information table 350, the play list per title 360, and the play list per terminal 370 may be stored in the data storage 340. Conversely, the content information 340 (file 340A, 340B) may be stored in the memory 33.

As will be described later, when a content information request message was received from the terminal 1, the processor 32 executes the content information request processing routine 330 to select content information IDs time-sequentially from a group of content information IDs stored in the play list per terminal 370 in association with the terminal ID corresponding to the requesting terminal, read out the content information 340 corresponding to each of the content information IDs from the data storage 34, and transmit the content information 340 to the terminal 1. The play list per terminal 370 is produced by the content information request processing routine 330 when the first content information request message was received from the content requesting terminal.

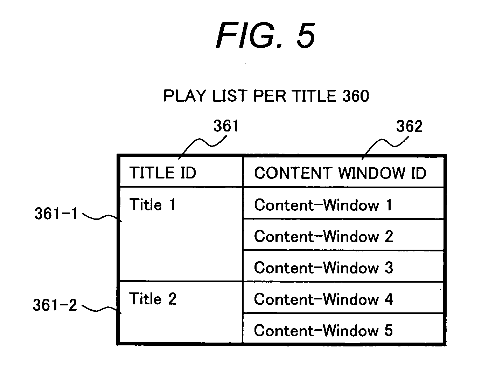

FIG. 5 shows an example of the structure of the play list per title 360. The play list per title 360 comprises a plurality of sub-lists (361-1, 361-2, ---) each having a title ID 361 (361-1, 361-2, ---). Each sub-list indicates a plurality of content window ID 362 associated with the title ID 361. Here, the title ID 361 indicates identification information, for example, a content title, which is capable of identifying the content requested by the terminal user.

In the present invention, the local CM content is delivered, for example, by inserting it between sub-contents of the main stream content specified with the title ID 361. The local CM content may be distributed before or behind the distribution of the main stream content. In the case where the local CM is inserted only one time into the main stream content specified by the title ID361, the main stream content is divided into a first sub-content and a second sub-content, and content delivery to the terminal is performed time-sequentially in the order of the first sub-content, the local CM content and the second sub-content. If the local CM content is inserted two times into the main stream content, the main stream content is divided into three sub-contents so as to accept the local content between two adjacent sub-contents. The local CM content may be delivered directly before or directly behind the main stream content. If no local CM is inserted, the main stream content specified by the title ID361 is delivered continuously without splitting into plural blocks.

The content window ID 362 is an identifier for indicating the time zone or time window to deliver specific one of main stream content, sub-content and local CM content. In the play list per title 360 shown in FIG. 5, the sub-list 361-1 indicates that the content whose title ID is "Title 1" is delivered time divisionally, combined with the local CM content, through three time windows. In this case, the main stream content may be divided into a first and a second sub-contents so that the first sub-content is delivered in the time window whose content window ID is "Content-Window 1", the local CM content is delivered in the time window whose content window ID is "Content-Window 2" and the second sub-content is delivered in the time window whose content window ID is "Content-Window 3".

The sub-list 361-2 indicates that the content whose title ID is "Title 2" is delivered time divisionally, combined with the local CM content, through two time windows. If the main stream content is delivered in the time window of "Content-Window 4", the local CM content is delivered in the time window of "Content-Window 5." Conversely, if the local CM content is delivered in the time window of "Content-Window 4", the main stream content is delivered in the time window of "Content-Window 5." The relation between the time window specified with the content window ID 362 and the content (main stream content, sub-content or local CM content) to be delivered in the time window is determined by referring to the content information table 350 as will be described later.

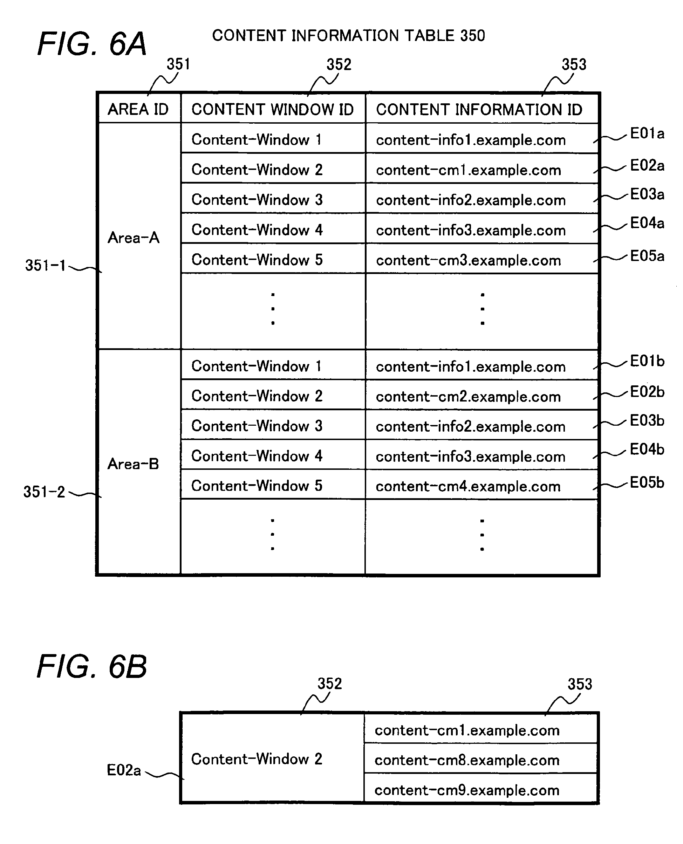

FIG. 6A shows a structural example of the content information table 350. The content information table 350 includes a plurality of sub-tables each having an area ID 351 (351-1, 351-2, ---). Each sub-table comprises a plurality of table entries (E01a - E05a,-, E01b - E05b, ---). Each of the table entries includes content window ID 352 and content information ID 353 as content control information. Any kind of location identification information that is managed by the location information server 4 is applicable to the area ID. For example, ID information to specify one of areas in a city, district, town, or village may be used as the area ID.

The content information ID 353 specifies the content information indicating the content ID of the main stream content, sub-content or the local CM content to be delivered in the time window having the content window ID 352. Each of a group of table entries E01a - E03a and a group of table entries E01b - E03b includes content window IDs 352 corresponding to the content having the title ID of "Title 1" shown in FIG. 5 and indicates the content information IDs 353 of sub-contents and local CM to be delivered in these content windows. As apparent by comparing table entries E02a and E02b, the content information ID 353 of the local CM differs depending on the area ID 351. This means that local CM content specific to each area can be inserted into the main stream content when the same main stream content is distributed widely to different areas.

As shown in FIG. 6B, for example, one table entry E02a may include a plurality of content information IDs 353 in the time window for distributing the local CM content. In this case, the content information server 3 decides the content information corresponding to the local CM content to be delivered in the time window specified by the content window ID 352, by selecting one content information ID from among the plurality of content information IDs registered in the table entry E02a, in accordance with a predetermined selection algorithm.

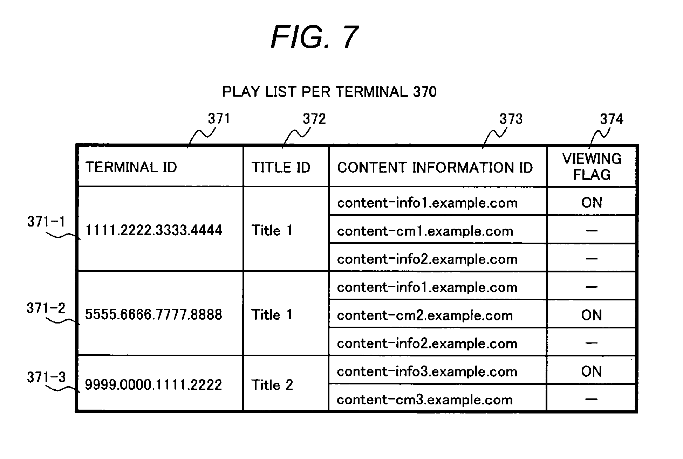

FIG. 7 shows an example of the play list per terminal 370 generated in the content information server 3 according to the current position of each terminal.

The play list per terminal 370 comprises a plurality of sub-lists each of which is specified by a terminal ID 371 (371-1, 371-2, ---) and a title ID 372. The sub-list includes a plurality of entries each indicating a content information ID 373 and a viewing flag 374. If there is no local CM to be inserted, only one entry is registered in the sub-list. The title ID 372 indicates the title ID of main stream content requested from a terminal having the terminal ID 371, and the viewing flag 374 indicates whether the content (main stream content, sub-content or local CM content) specified by the content information ID 373 is currently being viewed or listen at the terminal.

The content information server 3 sets the viewing flag 374 to "ON" state at an entry corresponding to content data which is currently being delivered from the content delivery server 5 to the content requesting terminal and viewed at the terminal, and switches the viewing flag 374 of the next entry to "ON" state each time a next content information request message was received from the terminal. By this way, the content information server 3 can instruct the content delivery server 5 to sequentially deliver a group of content data defined by the content information ID registered in each sub-list of the play list per terminal 370, and terminate the delivering one title of content when the delivery of content specified by the last entry has completed.

In the first embodiment, when a content information request message including a title ID and a terminal ID is received from a terminal, the content information server 3 judges whether a sub-list matched with the title ID and the terminal ID of the received message has been registered already in the play list per terminal 370. In the case where the sub-list has not been registered, the content information server 3 inquires of the terminal information (location information) server 4 an area ID indicating the current location of the terminal having the terminal ID. When the area ID was notified from the terminal information server 4, the content information server 3 generates a new sub-table to be registered in the play list per terminal 370 by searching the play list per title 360 shown in FIG. 5 for a group of content window IDs corresponding to the title ID indicated in the content information request message and by extracting a group of content information IDs corresponding to the group of content window IDs from a sub-table specified by the area ID within the content information table 350 shown in FIG. 6.

Storing of content information into the files 340A and 340B and registration of data to the play list per title 360 are performed through a data entry screen offered from the content information server 3 to the content server 9 or the local content server 11 by the administrator of the VOD service provider network N2 (hereafter referred to as a VOD service provider) or the administrator of local content provider network N3 (hereafter referred to as a local content provider).

As will be described later in detail, the play list edit routine 320 provides, in cooperation with the content server message control routine 313, a user interface screen for inputting data such as the title ID, content window ID, content information ID, area ID and content information, to the displays of the content server 9 and the local content server 11.

The content server 9 is provided with a message control function for communication with the content information server 3 and the content delivery server 5. When new content to be delivered in the VOD service was generated, the VOD service provider requests the content information server 3 to start up the play list edit routine 320 by using the input device and the display of the content server 9, and inputs various kinds of data including content information items to be stored in the content information server 3 through the user interface screen offered by the play list edit routine 320. The VOD service provider operates to deliver content corresponding to the content information having been registered to the content information server 3 to the content delivery server 5 so that the delivered content is stored in the data storage of the content delivery server 5.

The local content server 11 also is provided with a message control function for communication with the content information server 3 and the content delivery server 5. When new local CM content was generated, the local content provider requests the content information server 3 to start up the play list edit routine 320 by using the display screen and input device of local content server 11, and inputs various kinds of data to be stored in the content information server 3 through the user interface screen offered by the play list edit routine 320. The local content provider operates to deliver local CM content corresponding to the content information having been registered to the content information server 3 to the content delivery server 5 so that the delivered local CM content is stored in the data storage of the content delivery server 5.

Upon receiving a request message to startup the play list edit routine from the content server 9 or the local content server 11, the content information server 3 starts the play list edit routine 320, transmits display information of user interface screen generated by the play list edit routine 320 to the requesting server, updates the play list per title 360 and the content information table 350 according to the data inputted through the user interface screen, and registers new content information into the data storage 34.

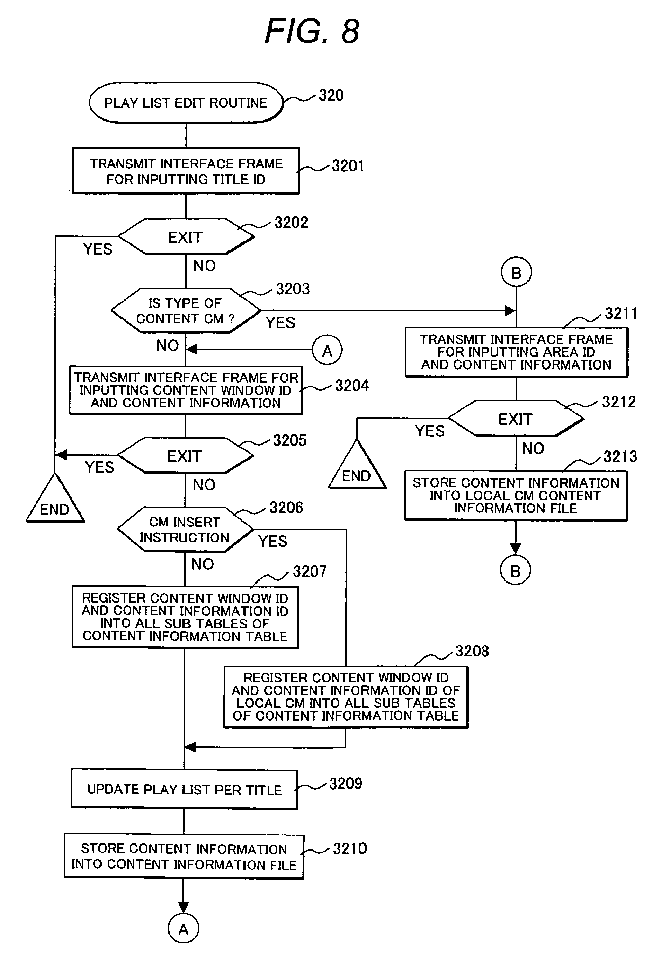

FIG. 8 is a flow chart showing an embodiment of the play list edit routine 320 to be executed by the processor 32 of the content information server 3. It is assumed here that the content information server 3 was requested to start up the play list edit routine 320 from the content server 9.

When the play list edit routine 320 was started, the processor 32 transmits display information of a first interface frame including data entry regions of such data as the content type, the title ID, and the play speed, and an Exit button to the requesting content server 9 or requesting local content server (Step 3201), and waits for the reception of input data from the content server 9 (3202). The content type indicates main stream content to be provided by the content server 9 or local CM content to be provided by the local content server 11.

When the first interface frame appears on the display screen of the requesting server, the content administrator who is the VOD service provider or the local content provider inputs the title ID, content type, and tolerance values of play speed. In the case of inputting from the local content server 11, only the content type may be inputted by omitting input of the title ID.

Upon receiving the data inputted through the first interface frame, the processor 32 stores the received data, and judges whether the Exit button was selected (3202). If the Exit button was selected, the processor 32 terminates the play list edit routine 320. If the Exit button was not selected, the processor 32 judges the content type of the input data (3203). In the case where the content type indicates usual main stream content, the processor 32 transmits a second interface frame for inputting content information and a content window ID to the requesting server (3204), and waits for the reception of input data. If the content type indicates CM content, the processor 32 transmits a third interface frame for inputting content information and an area ID to the requesting server (3211), and waits for the reception of input data.

The local content provider inputs the area ID indicating the valid area of local CM content, the content information ID of the local CM, and the content ID and play speed tolerance values to be a portion of the content information, through the third interface frame displayed on the display screen of the local content server 11. Upon receiving the data inputted through the third interface frame from the local content server 11, the processor 32 judges whether the Exit button was selected (3212). If the Exit button was selected, the processor 32 terminates the play list edit routine 320.

If the Exit button was not selected, the processor 32 registers, in association with the local ID specified by the local content provider, new content information including the received content ID and tolerance values of play speed into the local CM content information file 340B (3213), and repeats the steps 3211 - 3213 until the local content provider selects the Exit button. As the content information server 3 already knows the address of the content delivery servers 11 for the local CM content, the address of the content delivery server may be omitted from setting into the content information.

On the other hand, the VOD service provider inputs the content window ID, content information ID, and content ID and play speed tolerance values to be a portion of the content information, through the second interface frame displayed on the display screen of the content server 9. When the content window ID to specify a time window for inserting CM content was selected, the VOD service provider selects the CM insertion button prepared on the second interface frame instead of entering the content information ID and the content ID.

When the input data of the second interface frame is received from the content server 9, the processor 32 judges whether the Exit button was selected (3205). If the Exit button was selected, the processor 32 terminates the play list edit routine 320. If Exit button was not selected, the processor 32 judges whether the CM insertion button was selected (3206). If the CM insertion button was not selected, the processor 32 registers the correspondence of the content window ID to the content information ID received from the content server 9 into all the sub-tables 351-1, 351-2, --- prepared for each area in the content information table 350 (3207). After that, the processor 32 registers the correspondence of the title ID specified by the first user interface to the content window ID specified by the current second user interface, into the play list per title 360 (3209), registers content information indicating the relation between the content information ID and the content ID into the content information file 340A (3210), and repeats the process starting from step 3204.

In the case where CM insertion was instructed by the CM insertion button, the processor 32 registers the correspondence of the content window ID specified by the current second user interface to the local CM content information ID retrieved from the local CM content information file 340B, into all the sub-tables 351-1, 351-2, --- prepared for each area in the content information table 350 (3208), and executes steps 3209 and 3210. The local CM content information ID is retrieved from the local CM content information file 340B by utilizing the area ID indicated in the content information table 350 as a search key. If a plurality of content information IDs have been registered in association with the same area ID in the local CM content information file 340B, the content information ID may be selected by a predetermined selection algorithm, for example, in order of the content information ID from the latest one.

Due to the above control sequence, input operations of the content window ID or area ID, and the content information are repeated until the server administrator selects the Exit button, new entries are added to the content information table 350 shown in FIG. 6 and the play list per title 360 shown in FIG. 5, and content control information is registered into the content information file 340 (340A or 340B) shown in FIG. 4. Addition of new entries to the play list per terminal 370 shown in FIG. 7 is performed, as will be described later in detail, when a content information request is issued from the terminal.

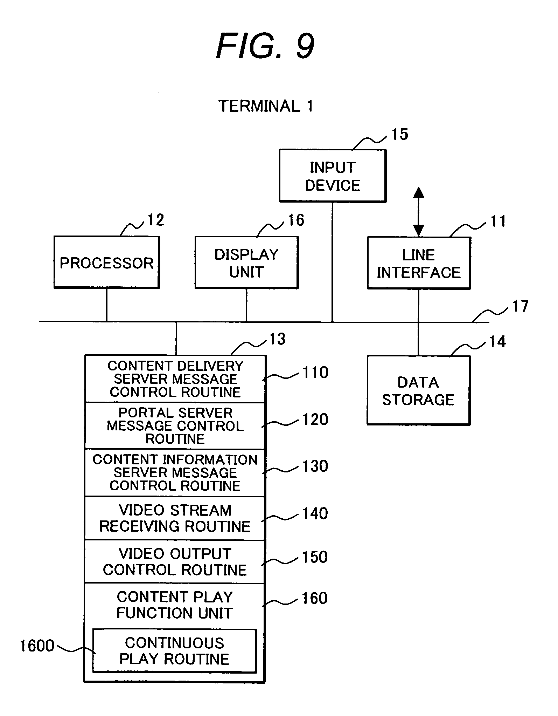

FIG. 9 is a block diagram showing an embodiment of the structure of the terminal 1. The terminal 1 comprises a line interface 11 for connecting to the gateway 2 (2a, 2b,--) in the carrier network N1, a processor 12, a memory 13, a data storage 14, an input device 15, display unit 16, and a bus 17 for mutually connecting these elements.

In the memory 13, a content delivery server message control routine 110 for controlling the transmission and reception of video delivery control messages with the content delivery server 5, a portal server message control routine 120 for controlling the transmission and reception of messages with the portal server 8, a content information server message control routine 130 for controlling the transmission and reception of messages with the content information server 3, a video stream receiving routine 140 for receiving video data as the delivery content from the content delivery server 5, a video output control routine 150 for outputting video data received from the content delivery server 5 to the display unit, and a content play function unit 160 are prepared as software relating to the present invention which are executed by the processor 12.

The content play function unit 160 includes a continuous play routine 1600 for receiving CM content and main stream content having been divided into a plurality of sub-contents by the insertion of the CM content, one after another. In this embodiment, each terminal can continuously receive and play the main stream content with inserted CM content by executing the continuous play routine 1600.

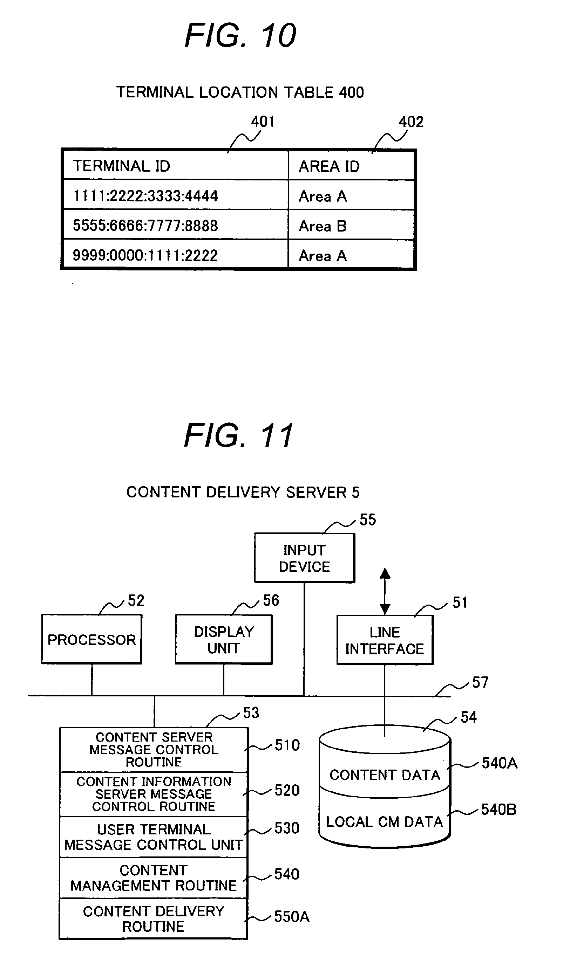

FIG. 10 shows an example of the structure of the terminal location table 400 provided in the terminal information (location information) server 4. The terminal location table 400 comprises a plurality of table entries each indicating the correspondence of the terminal ID 401 to the area ID 402. The terminal information server 4 manages the current location of each terminal. When the terminal 1 moves into a new area, the terminal information server 4 rewrites the area ID 402 associated with the terminal ID 401 of the moved terminal 1 to an area ID of the new area in the terminal location table 400.

FIG. 11 is a block diagram showing an embodiment of the content delivery server 5. The content delivery server 5 comprises a line interface 51 for connecting to the IP network N10, a processor 52, a memory 53, a data storage 54 in which a content data file 540A and a local CM data file 540B are formed, an input device 55, a display unit 56, and a bus 57 for mutually connecting these elements.

In the embodiment, the content data file 540A stores therein, in association with the content ID, the main stream content (or sub-content) supplied from the content server 9 (9a, 9b) of the VOD service provider network N2. The local CM data file 540B stores therein, in association with the content ID, the local CM content supplied from the local content server 11 of the local content provider network N3. Because these data files 540A and 540B have upper limits on their content storage capacity, respectively, each of the VOD service provider and the local content provider performs registration of content data into the content delivery server 5 within a pre-assigned data capacity range and deletion of content data that becomes unnecessary at any time.

In the memory 53, a content server message control routine 510 for controlling the transmission and reception of messages with the content server 9, a content information server message control routine 520 for controlling the transmission and reception of messages with the content information server 3, a user terminal message control routine 530 for controlling the transmission and reception of message with the user terminal 1, a content management routine 540, and a content delivery routine 550A are prepared as software relating to the present invention which are executed by the processor 52.

The content management routine 540 is a program for adding and deleting content data to and from the data files 540A and 540B, in cooperation with the content server 9 and the local content server 11. Upon receiving a viewing request message including a content ID from one of the terminals, the content delivery server 5 reads out from the file tables 540A or 540B, the content data corresponding to the content ID designated in the viewing request message and delivers the content data to the requesting terminal, by executing the content delivery routine 550A.

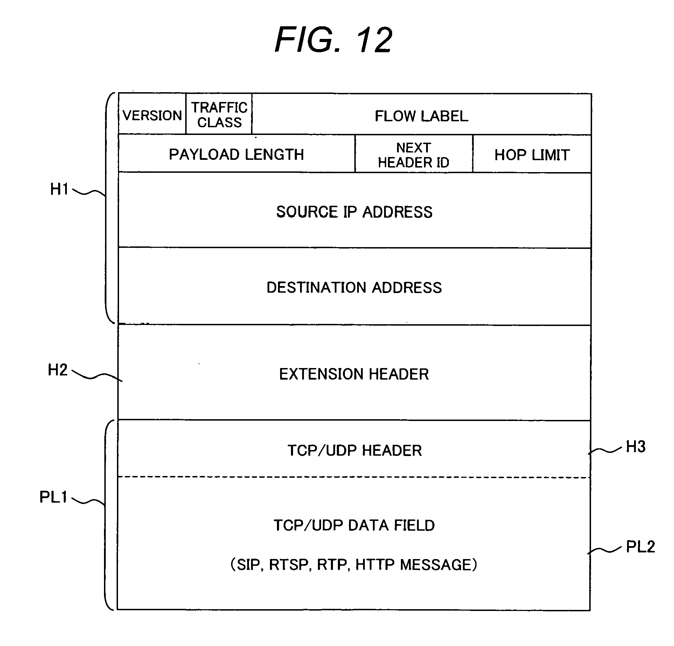

In the VOD delivery network shown in FIG. 1, each of the terminals 1 and the servers (3, 4, 5, 8, 9, 11) transmits and receives messages in the form of IPv6 packet shown in FIG. 12.

The IPv6 packet is composed of a basic header H1, an expanded header H2, and a payload PL1. The basic header H1 includes version of IP protocol ("4" indicates IPv4 and "6" indicates IPv6), a traffic class (priority), a flow label, a payload length, a next header ID indicating the identifier of header which is located at a position next to the basic header H1, a hop limit indicating the number of passable gateways, a source IP address, and a destination IP address.

The expansion header H2 is inserted between the basic header H1 and the payload PL1. The expansion header H2 includes, for example, such information as an option header, a routing header and a fragment header. The payload PL1 includes a protocol header of transport layer (TCP/UDP header) H3, and a data section of the transport layer PL2.

The data section PL2 of the transport layer includes a message or a packet according to the protocol such as SIP (Session Initiation Protocol), RTSP (Real Time Streaming Protocol), RTP (Real-time Transport Protocol), and HTTP (Hyper Text Transfer Protocol).

The SIP is a protocol for controlling establishment and release of a session between the terminal and server. A SIP message comprises a start line indicating the type of SIP message (Request-Method) and a destination address (URI), a header section where the request or response and SIP parameters are described, and a message body section where the contents of session are described. In the case where media information is communicated between the terminal and server, the media information is set in the message body section.

The RTSP is a protocol for controlling the transmission of multimedia data from the server to the client. An RTSP message comprises a header field where RTSP parameters are set, and a message body section including media information to be delivered as a stream. An RTSP request message to be transmitted from the client to the server includes a Request line, and an RTSP response message to be transmitted from the server to the client includes a Status line.

An RTP packet comprises a basic header including a session identifier, an expansion header, and a payload for including multimedia data.

The HTTP is a protocol for transmitting and receiving HTML (Hypertext Markup Language) text information between a client and a server. A HTTP message comprises a header field including HTTP parameters, and a message body where HTTP text information is set. A HTTP request message includes, in the first line (request line), the method to be applied to the resource, a resource identifier and a protocol being used. A HTTP response message includes, in the first line (status line), a protocol version, status codes and a reason sentence.

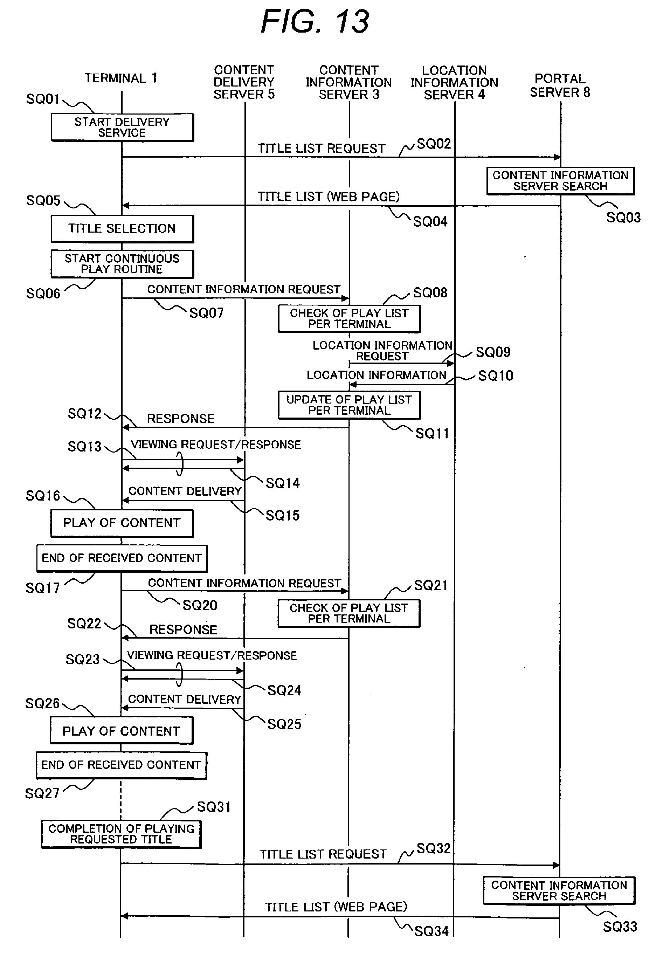

Next, a procedure for delivering content with inserted local CM from the content delivery server 5 to the terminal 1 under the control by the content information server 3 will be described by referring to the communication sequence shown in FIG. 13. The procedure is performed when the terminal 1 has requested delivery of content having a title ID of "Title 1". The Content having the title ID of "Title 1" is delivered through three time windows having the content window IDs of "Content-Window 1", "Content-Window 2" and "Content Window 3", as shown by the sub-list 361-1 in FIG. 5.

When the user of the terminal 1 wishes to view the content of "Title 1", the user starts up the delivery service of the portal server 8 (SQ01) by logging in to the portal server 8 (8a or 8b) whose address has been already known to the user. By starting the delivery service, a title list request message is transmitted from the terminal 1 to the portal server 8 (SQ02). Here, HTTP is used in communication between the terminal 1 and the portal server 8. The title list request message includes the terminal ID of the requesting terminal 1 in the body of the HTTP message.

Upon receiving the title list request message from the terminal 1, the processor 82 of the portal server 8 executes the content information server searching routine 830 shown in FIG. 14 (SQ03). In the content information server searching routine 830, the processor 82 searches the content information server list per terminal 840 shown in FIG. 3 for a content information server ID 842 associated with a terminal ID 842 which matches with the terminal ID designated in the title list request message (8301). After that, the processor 82 generates a title list Web page linked to a server address (URL) which is extracted from the content information server ID 842 retrieved from the content information server list per terminal 840 (8302), transmits the Web page to the requesting terminal 1 (8303, SQ04 in FIG. 13), and terminates the content information server searching routine 830. The title list Web page includes a title list including a plurality of title names selectable by the user. Each of the title names is associated with a title ID.

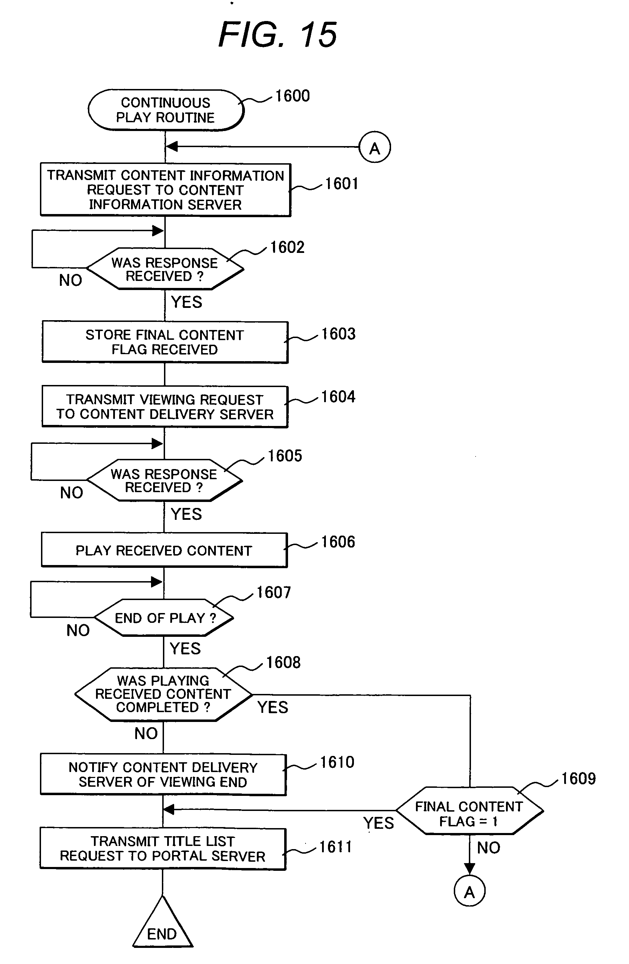

The terminal 1 displays the Web page received from the portal server 8 on the display screen. When the terminal user selects a title that the user wants to view from the title list on the Web page, the processor 12 of the terminal 1 starts the continuous play routine 1600 shown in FIG. 15.

In the continuous play routine 1600, the processor 12 generates a content information request message including the terminal ID and the title ID associated with the title that the user has selected, transmits the content information request message to the content information server 3 (1601, SQ07 of FIG. 13), and waits for a response from the content information server (1602). Although HTTP is utilized in the communication between the terminal 1 and the content information server 3 in this embodiment, a protocol other than HTTP is applicable to the communication. The content information request message includes in the HTTP message body a terminal ID of the requesting terminal 1 and a title ID associated with the title selected by the user.

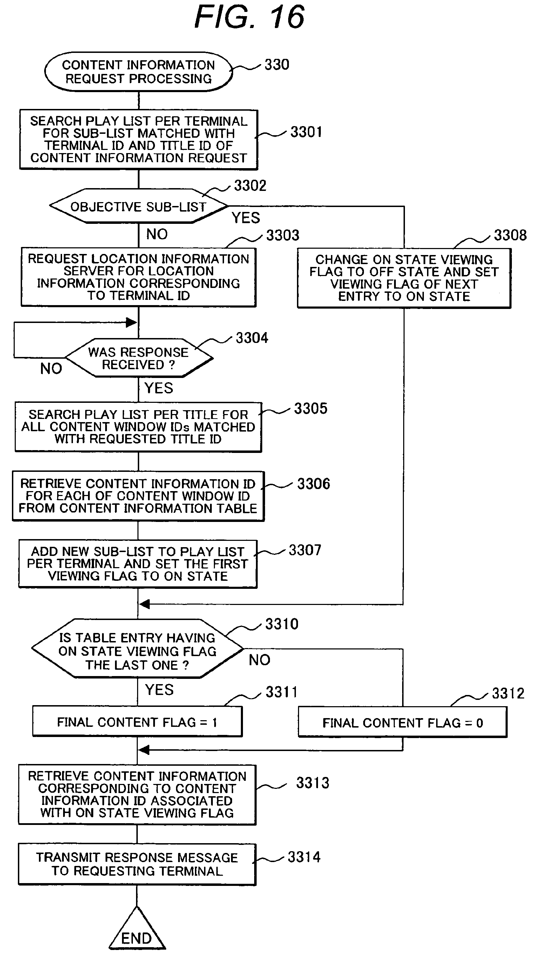

Upon receiving the content information request message from the terminal 1, the processor 32 of content information server 3 starts the content information request processing routine 330 shown in FIG. 16.

In the content information request processing routine 330, the processor 32 searches the play list per terminal 370 for a sub-list having the terminal ID 371 and the title ID 372 match with the terminal ID and the title ID indicated in the content information request message (3301), and judges the search results (3302, SQ08 of FIG. 13).

If the play list per terminal 370 does not have a sub-list matching with the terminal ID and title ID indicated in the content information request message, the processor 32 requests the location information server 4 to search for location information corresponding to the terminal ID indicated in the content information request message (3303, SQ09 of FIG. 13), and waits for a response from the location information server 4 (3304). Here, SIP is applied, for example, to the communication between the content information server 3 and the location information server 4, and the location information request message transmitted from the content information server 3 to the location information server 4 includes the terminal ID in the SIP message body. Instead of SIP, however, other type of protocol such as HTTP may be applicable to the communication between the content information server 3 and the location information server 4.

Upon receiving the location information request message from the content information server 3, the location information server 4 searches the terminal location table shown in FIG. 10 for the area ID 402 corresponding to the terminal ID indicated in the received message, and replies a response message including the searched area ID in the SIP message body to the content information server 3 (SQ10 in FIG. 14).

Upon receiving the response message indicating the area ID from the location information server 4 (3304), the processor 32 of content information server 3 searches the play list per title 360 shown in FIG. 5 for all content window IDs corresponding to the title ID extracted from the received content information request message (3305), and refers to the content information table 350 shown in FIG. 6 to search the sub-lists corresponding to the area ID notified from the location information server 4 for content information IDs corresponding to each of the content window IDs retrieved from the play list per title 360 (3306). Next, the processor 32 adds a new sub-list indicating the above terminal ID and title ID to the play list per title 370 shown in FIG. 7, registers a group of content information IDs having been retrieved from the content information table 350 as the content information ID 373 into the new sub-list, and sets the viewing flag 374 in the first entry of the new sub-list to an ON state (3307, SQ11 of FIG. 13).

After that, the processor 32 judges whether the table entry having the ON state viewing flag is the last entry within the sub-list (3310). If the table entry is the last one, the processor 32 sets a Final Content flat to "1" (3311). If the table entry is not the last one, the processor 32 sets the Final Content flag to "0" (3312), searches the data storage 34 for content information corresponding to the content information ID indicated in the entry having the ON state viewing flag (3313), generates a response message including the Final Content flag and content information such as the content ID, the address of content delivery server and play speed tolerance values in the HTTP message body, transmits the response messages to the requesting terminal (3314, SQ12 of FIG. 13), and terminates the execution of the content information request processing routine 330.

In the case where the terminal 1a-2 having a terminal ID of "1111:2222:3333:4444" has transmitted, for example, a content information request message designating "Title 1" as the title ID from an area having the area ID of "Area-A", the sub-list 371-1 shown in FIG. 7 is added as the new sub-list to the play list per terminal 370. When the terminal 1b-1 having a terminal ID of "5555:6666:7777:8888" has transmitted a content information request message designating "Title 1" as the title ID from an area having the area ID of "Area-B", the sub-list 371-2 as shown in FIG. 7 is added as the new sub-list to the play list per terminal 370.

As will be described later, the terminal 1 judges the Final Content flag when the playing of the content having the content ID notified from the content information server 3 is over. If the Final Content flag is a "0" state, the terminal 1 transmits a content information request message designating the same title ID as the previous request message to the content information server 3. The processor 32 of content information server 3, therefore, repeats the execution of the content information request processing routine 330 each time the content information request message was received.

When the content information server 3 receives the content information request message designating the same title ID as the previous one from the terminal 1, the play list per terminal 370 is in a state where the table entry corresponding to the content ID and the terminal ID indicated in the received message has already been registered. In this case, the processor 32 changes the viewing flag from the ON state to an OFF state in the sub-list searched in the play list per terminal 370 in step 3301, and sets the viewing flag in the next entry to the ON state (3308), and performs the operations beginning from step 3310.

Returning to FIG. 15, upon receiving the response message for the content information request was received from the content information server 3, the processor 12 of the terminal 1 in the state of executing the continuous play routine 1600 retains the status of Final Content flag indicated in the response message (1603), transmits a viewing request message including the content ID to the content delivery server 5 in accordance with the content ID and the address of content delivery server extracted from the received response message (1604, SQ13 of FIG. 13), and waits for a response from the content delivery server 5 (1605).

In the communication between the terminal 1 and the content delivery server 5, for example, RTP is applied to the delivery of content data from the content delivery server 5 to the terminal 1, and RTSP is applied to the communication other than the content data delivery. Upon receiving the viewing request message of RTSP from the terminal 1, the delivery server 5 transmits a response message of RTSP to the requesting terminal 1 (SQ14 of FIG. 13), reads out content data corresponding to the content ID indicated in the viewing request message from the data storage 54, and delivers the content data to the requesting terminal 1 by RTP (SQ15 of FIG. 13).

In the continuous play routine 1600 shown in FIG. 15, when the processor 12 of terminal 1 which is in the state of awaiting a response from the content delivery server receives the response message from the content delivery server 5 (1605), the processor 12 operates thereafter so as to process content data received by RTP from the content delivery server 5 and to output the reproduced content to the display screen (1606, SQ16 of FIG. 13).

Upon detecting the content play end (1607), the processor 12 judges the cause of play end (1608). If the play of the content data having been received from the content delivery server 5 was completed, the processor 12 checks the status of Final Content flag (1609, SQ17 in FIG. 13). If the Final Content flag is not "1", the processor 12 transmits a content information request message including the content ID identical to the previous one to the content information server 3 (1601, SQ20 of FIG. 13), and repeats the operations of steps 1602 to 1608.

When the content information server 3 receives the content information request message designating the same title ID as the previous one from the terminal 1, the table entries (sub-list) matched with the title ID and terminal ID designated in the received content information request message are already registered in the play list per terminal 370. In this case, the processor 32 rewrites the status of viewing flag stored in the play list per terminal 370 in step 3308 of the content information request processing routine 330 (SQ21 in FIG. 13), and executes steps 3310 - 3314 having been described. Resultantly, a response message including a new content ID and a Final Content flag in the "0" state is transmitted from the content information server 3 to the terminal 1 (SQ22 in FIG. 13) until the table entry whose viewing flag was switched to the ON state becomes the last entry within the sub-list, and a sequence SQ23 - SQ27 similar to the sequence SQ13 - SQ17 is executed repeatedly.

The terminal 1 repeats the transmission of content information request including the same title ID, and consequently the entry having ON state viewing flag becomes the last entry within the sub-list of the play list per terminal 370. Then the content information server 3 transmits a final response message including a new content ID and a Final Content flag in the "1" state to the terminal 1.

When the play of content data including the content ID notified in the final response message has ended on the terminal 1, the state "1" of the Final Content flag is detected in step 1609 of the continuous play routine 1600 shown in FIG. 15. Then the processor 12 judges that the playing of all content having the title ID requested by the terminal user has been completed (SQ31 in FIG. 13), and transmits a next title list request message to the portal server 8 (1611, SQ32 of FIG. 13). In this case, the portal server 8 repeats operations of SQ33 and SQ34 similar to the operations of SQ03 and SQ04.

When the content play end was detected in step 1607 of the continuous play routine 1600, the processor 12 judges the cause of play end. If the cause of play end is other than the completion of playing the received content, for example, in the case where the user has operated the terminal so as to stop the content play, the processor 12 executes step 1611 after transmitting a notification of viewing end (1610) to the content delivery server 5.

In the first embodiment, the content information server 3 is provided with the content information table 350 for storing a group of content information IDs arranged in order of playing the content for each area ID, and the play list per terminal 370 so that when the first content information request was received from the terminal 1, the content information server 3 adds a new sub-list indicating the terminal ID of the requesting terminal 1 and the title ID to the play list per terminal 370 and registers a group of content information IDs selected from the content information table 350 according to the current location of the terminal into the new sub-list.

Further, in the first embodiment, the content information server 3 reads out the content information ID in order of table entry in the sub-list of the play list per terminal 370 each time the content information request message was received from the requesting terminal and notifies the requesting terminal of a content ID specified by the content information ID, so that the requesting terminal can issue a content viewing request to the content delivery server 5 according to the content ID notified from the content information server 3 and transmit a next content information request message to the content information server 3 each time the play of content having been delivered from the content delivery server 5 has completed, and the content delivery server 5 can deliver main stream content with local CM content depending on the current location of the requesting terminal.

According to the embodiment, because the content information server 3 adds a new sub-list to the play list per terminal 370 depending on the location information of each terminal obtained from the location information server 4 and controls the content delivery from the content delivery server 5 to the terminal according to the play list per terminal 370, information service for delivering local CM to each terminal is achieved without leaking the location information of each terminal to the VOD service provider.

In the first embodiment, when the content information request designating the title ID was received from the terminal, the content information server 3 specifies a group of content window IDs corresponding to the title ID by referring to the play list per title 360 and searches the content information table 350 for a group of content information IDs to be registered in the play list per terminal 370, based on the area ID indicating the current location of the terminal and the content window IDs specified by the play list per title 360.

According to the above system structure, a group of content information IDs can be retrieved from the content information table 350 by using a group of content window IDs as search keys. In order to insert local CM contents different for each area into main stream contents having the same title ID, therefore, the content information table 350 can store multiple groups of content information IDs that include the same sub-content information IDs and differ to each other only in the local CM content information IDs.

### Second Embodiment

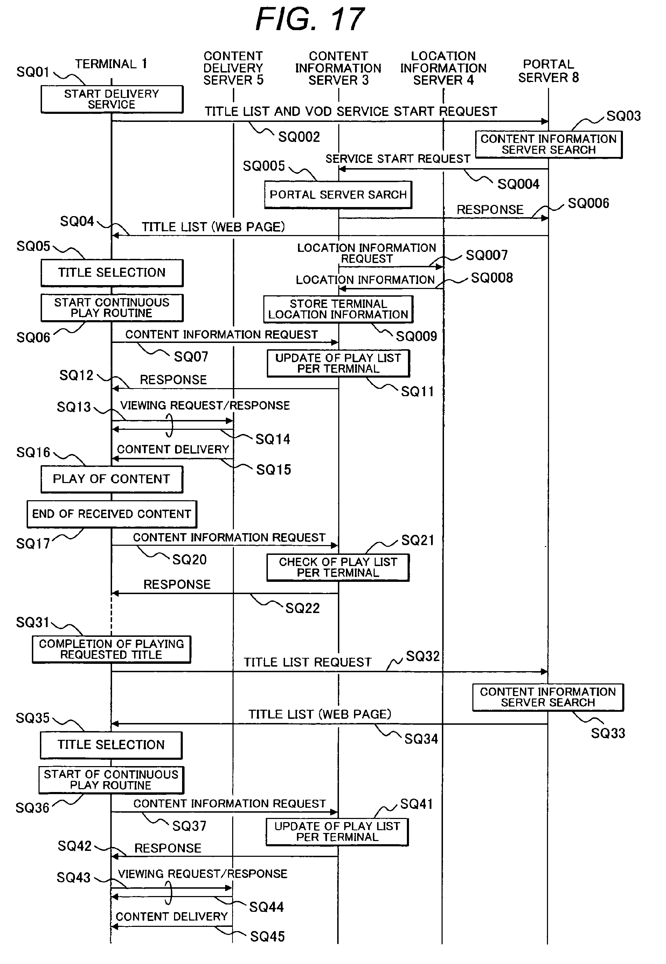

Next, the second embodiment of the present invention will be described by referring to FIG. 17 through FIG. 23.

FIG. 17 shows a communication sequence in the second embodiment. In FIG. 17, the same reference numerals are assigned to the same operations as in the communication sequence shown in FIG. 13, and descriptions will be abbreviated about operations having been described already in the first embodiment.

The second embodiment is **characterized in that** when the first title list request message for starting the VOD service was received from the terminal 1 (SQ002), the portal server 8 treats the received message as a title list and VOD start request, and transmits a service start request to the content information server 3 (SQ004).

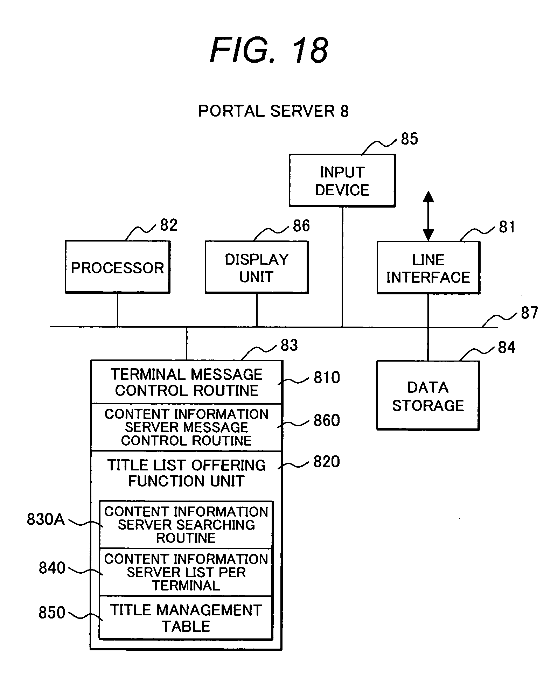

FIG. 18 is a block diagram of the portal server 8 applicable to the second embodiment.

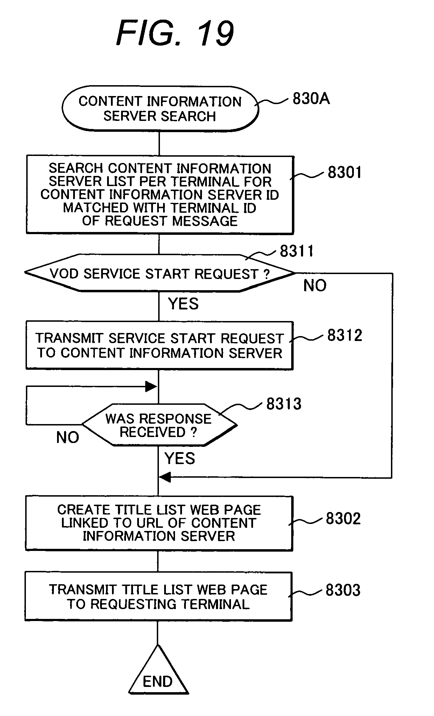

Comparing with the first embodiment shown in FIG. 2, the second embodiment is **characterized in that** the memory 83 further includes a content information server message control routine 860 for controlling the transmission and reception of messages with the content information server 3, and the title list offering function unit 820 includes a content information server searching routine 830A which differs somewhat from the content information server searching routine 830 in the first embodiment, as shown in FIG. 19.

FIG. 19 shows a flow chart of the content information server searching routine 830A to be executed by the processor 82 of portal server 8 when a title list request message was received from the terminal 1.

In the content information server searching routine 830A, the processor 82 searches the content information server list per terminal 840 shown in FIG. 3 for a content information server ID 842 associated with the terminal ID 841 matched with the terminal ID in the title list request message (8301). After that, the processor 82 judges whether the title list request message received this time is the first title list request message transmitted as a VOD service start request in order to start the VOD service from the terminal having the terminal ID 841 (8311).

The processor 82 can make this judgment by using log records stored in the portal server 8. Instead of using log records, specific identification information may be set into the first title list request message by the requesting terminal for the purpose of indicating that the message was transmitted as the VOD service start request. For example, URL indicating the access destination in the VOD service may be stored beforehand in each terminal, so that the terminal can set the URL as the specific identification information only in the first title list request message. In this case, the portal server 8 can judge that the received message is transmitted as the VOD service start request, by detecting the URL in the received message.

When the title list request message is not the VOD service start request, the processor 82 generates a title list Web page linked to the server address (URL) specified by the content information service ID 842, based on the searched results of the content information server list per terminal 840 (8302), transmits the Web page to the requesting terminal 1 (8303, SQ04 in FIG. 17), and terminates the content information server searching routine 830A. The title list Web page includes a title list indicating a plurality of title names selectable by the user, and a title ID is associated with each of the title names.

When the title list request message was judged as the VOD service start request, the processor 82 transmits a service start request message to the content information server 3 (8312, SQ004 in FIG. 17), and waits for a response from the content information server 3 (8313). The service start request message includes the terminal ID of the requesting terminal in the HTTP message body. Upon receiving an HTTP response message from the content information server 3 (SQ006 in FIG. 17), the processor 82 executes steps 8302, 8303 (SQ04 in FIG. 17), and terminates the content information server searching routine 830A.

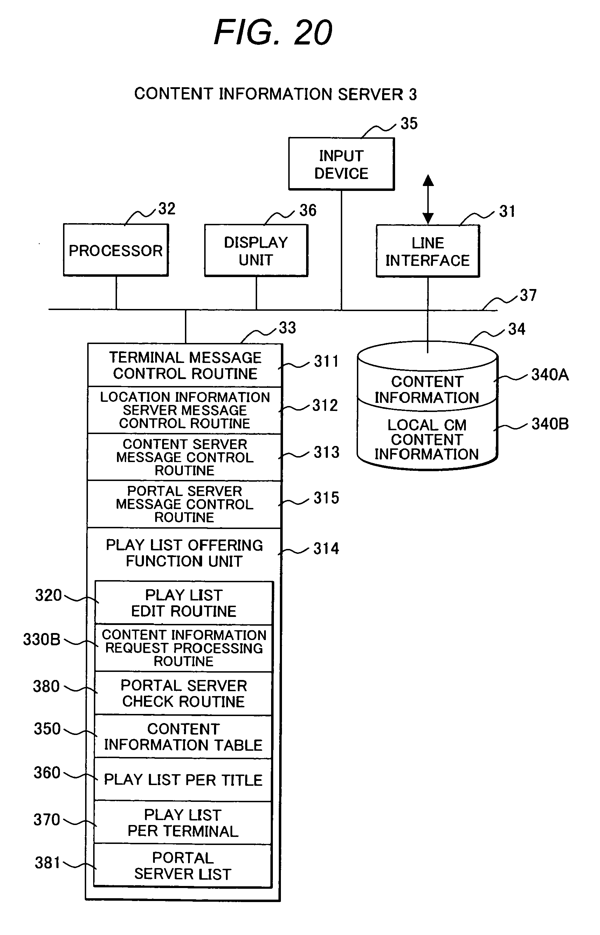

FIG. 20 shows a structural example of the content information server 3 to be applied to the second embodiment.

Comparing with the first embodiment shown in FIG. 4, the content information server 3 of the present embodiment is **characterized in that** the memory 33 further includes a portal server message control routine 315 for controlling the transmission and reception of messages with the portal server 8, and the play list offering function unit 314 includes a portal server check routine 380 and a portal server list 381.

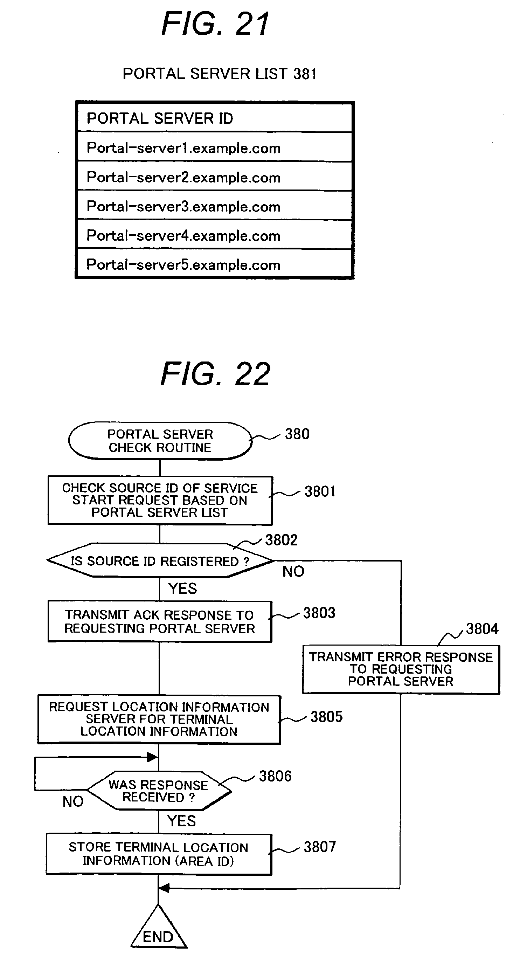

FIG. 21 shows an example of the portal server list 381.

The portal server list 381 indicates at least one portal server ID, for example, a server address of the portal server within the VOD service provider network N2 (N2a, N2b, ---) cooperating with the carrier network N1 to which the content information server 3 belongs.

FIG. 22 is a flow chart of the portal server check routine 380 to be executed by the processor 32 of content information server 3 when a service start request message was received from the portal server 8.

In the portal server check routine 380, the processor 32 checks whether the source address of the service start notification message has been registered as a portal server ID in the portal server list 381 (3801). If the source address is not found in the portal server list 381, the processor 32 transmits an error response message to the source of the service start notification message (3804), and terminates the portal server check routine 380.

If the source address of the service start notification message is found in the portal service list 381, the processor 32 transmits an ACK response to the source (portal server 8) of the service start notification message (3803). After that, the processor 32 transmits to the location information server 4 a location information request message which includes the terminal ID indicated in the service start notification message in the SIP message body (3805, SQ007 of FIG. 17), and waits for a response from the location information server 4 (3806). Upon receiving a response message including the area ID and the terminal ID in the SIP message body from the location information server 4 (SQ008 in FIG. 17), the processor 32 stores the correspondence of the terminal ID to the area ID in the memory 33 (3807, SQ009 in FIG. 17), and terminates the portal server check routine 380.

In the first embodiment, the content information server 3 obtained the terminal location information from the location information server 4 when the first content information request message was received from the terminal 1. In the second embodiment, however, because the content information server 3 can obtain the terminal location information from the location information server 4 in response to the service start request received from the portal server 8, when the first content information request message was received from the terminal 1 (SQ07), the content information server 3 can update the play list per terminal (generating a sub-list) (SQ11) by omitting communication with the location information server 4 as shown in FIG. 17.

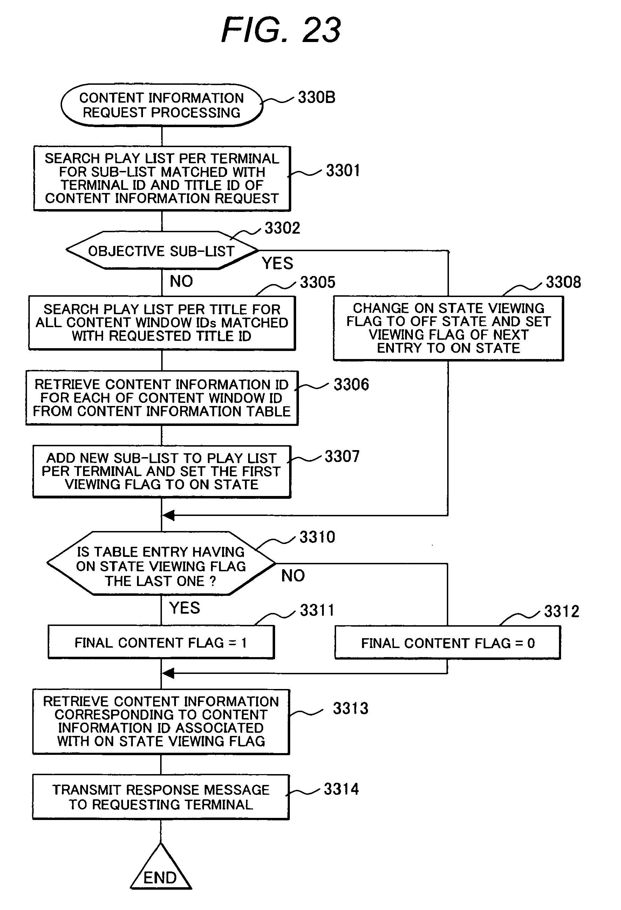

Upon receiving the content information request message from the terminal 1 (SQ07), the processor 32 of the content information server 3 executes the content information request processing routine 330B shown in FIG. 23.

Comparing with the content information request processing routine 330 having been described in the first embodiment by referring to FIG. 16, the content information request processing routine 330B eliminates the step 3303 of requesting the terminal location information from the location information server 4 and the step 3304 of awaiting a response.

In the content information request processing routine 330B, the processor 32 searches the play list per terminal 370 for a sub-list including the terminal ID 371 and title ID 372 matched with the terminal ID and the title ID indicated in the content information request message (3301). If the objective sub-list is not found (3302), the processor 32 searches the play list per title 360 shown in FIG. 5 for all content window IDs corresponding to the title ID extracted from the content information request message (3305), and refers to the content information table 350 shown in FIG. 6 to retrieve content information IDs corresponding to each of the content window IDs from the sub-list corresponding to the area ID stored in SQ009 of FIG. 17 (3306). After that, in the same procedure as in the first embodiment, the processor 32 registers a group of content information IDs retrieved from the content information table 350 into a new sub-list having been added to the play list per terminal 370, sets the viewing flag of the first entry to the ON state (3307, SQ11 of FIG. 17), transmits a response message indicating the Final Content flag and content information ID to the requesting terminal (3310 - 3312, SQ12 of FIG. 17), and terminates the content information request processing routine 330B.

When the terminal 1 receives the response message from the content information server 3 (SQ11), the sequence of steps SQ13 - SQ31 same as in FIG. 13 is performed. When the terminal 1 transmits the second title list request message to the portal server 8 (SQ32), the processor 82 of the portal server 8 executes the content information server searching routine 830B shown in FIG. 19 (SQ33).

In the case where the second or later title list request message was received, the processor 82 retrieves the content information server ID from the content information server list per terminal 840 (8301), transmits a title list Web page to the requesting terminal without transmitting a service start request to the content information server 3 (8303, SQ34 of FIG. 17), and terminates the content information server searching routine 830B. In FIG. 17, a sequence of steps SQ035 - SQ45 is repeated thereafter in similar to the sequence of steps SQ005 - SQ15. Third Embodiment

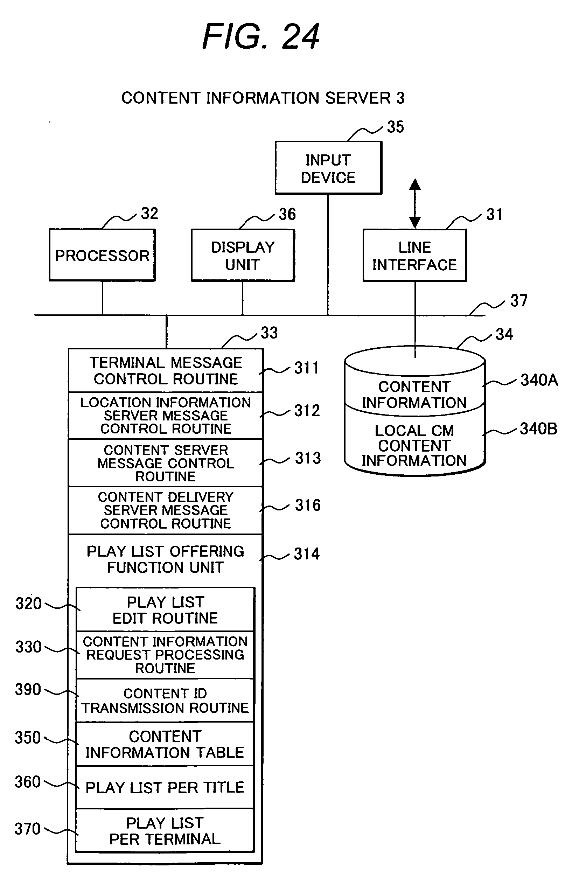

Next, the third embodiment of the present invention will be described by referring to FIG. 24 through FIG. 31. In the third embodiment, even if the content specified by the title ID is divided into a plurality of sub-contents due to the insertion of local CM content, the plural sub-contents are managed with the same content ID.

FIG. 24 is a block diagram of the content information server 3 to be applied to the third embodiment.

The content information server 3 of the third embodiment includes a content delivery server message control routine 316 for controlling the transmission and reception of messages with the content delivery server 5 in the memory 3 of the content information server 33 of the first embodiment shown in FIG. 4, and a content ID transmission routine 390 in the play list offering function unit 314.

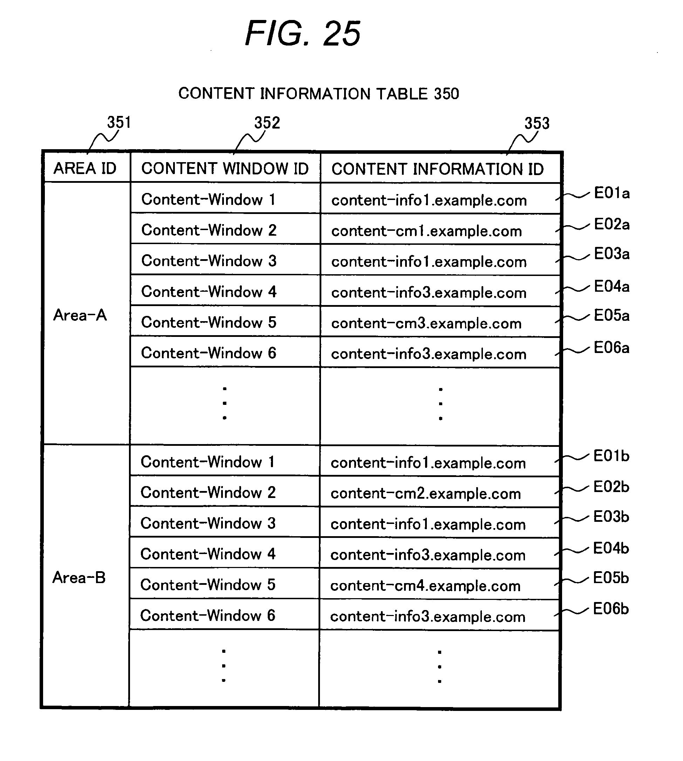

FIG. 25 shows an example of the content information table 350 provided in the content information server 3 of the third embodiment. Here, the play list per title 360 is assumed to have the contents shown in FIG. 5, in similar to the first embodiment.

In the content information table 350 of this embodiment, as can be seen from the values of the content information ID 353 of entries E01a and E03a and the values of the content information ID 353 of entries E01b and E03b, the same content information ID 353 is assigned to a plurality of sub-contents that are divided from the same main stream content by the insertion of CM content and delivered through different content windows. This arrangement means that each of the sub-contents has the same content ID as the content ID assigned to the main stream content specified by the title ID. In the content information table 350 of the third embodiment, a plurality of content information IDs for different local CM contents may be registered in association with one content window ID 353, as shown in FIG. 6 (B).

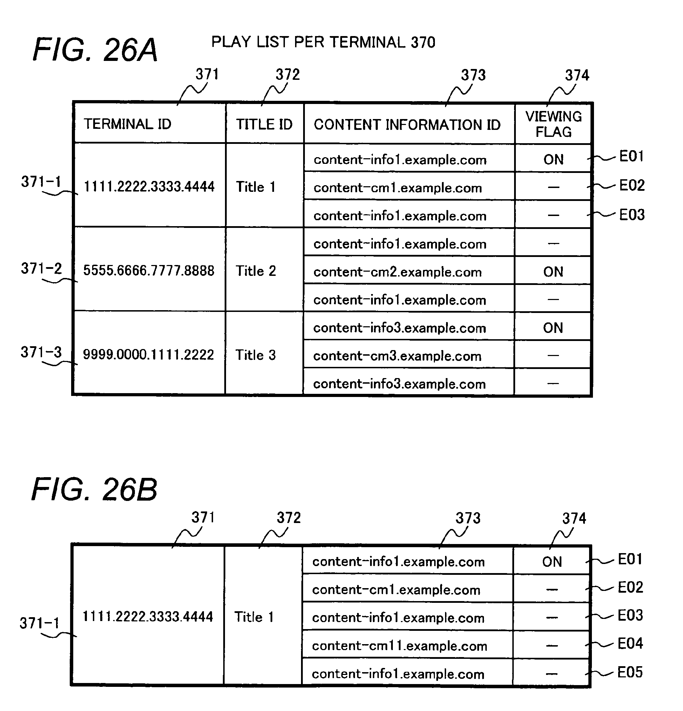

FIG. 26A shows an example of the play list per terminal 370 generated in the embodiment. As described above, because the content information table 350 of this embodiment stores the same content information ID in association with a plurality of content window IDs for sub-contents, a plurality of content information IDs 373 for the sub-contents have also identical ID values in each of sub-lists (371-1, 371-2, 371-3) of the play list per terminal 370 having been generated based on the content information table 350 and play list per title 360.

FIG. 26B shows an example of sub-list 371-1 in the case where two local CM contents were inserted into one main stream content. The sub-list 371-1 indicates that "content-info1.example.com" is assigned as the content information ID to the main stream content having a title ID of "Title 1" and that two local CM contents whose content information IDs are "content-cm1.example.com" and "content-cm11.example.com", respectively, are inserted into the main stream content.

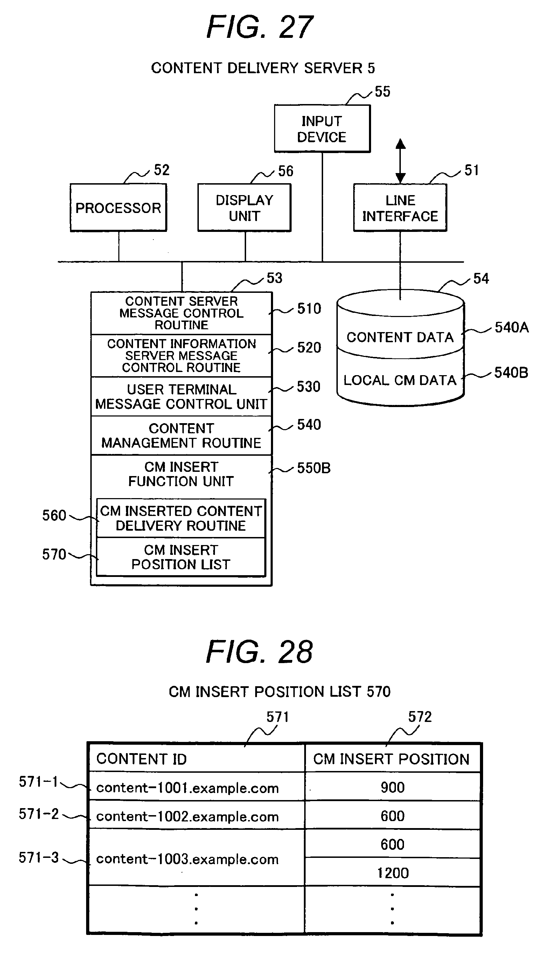

FIG. 27 shows a structural example of the content delivery server 5 to be applied to the third embodiment. The content delivery server 5 of the third embodiment includes a CM insert function unit 550B in the memory 53, instead of the content delivery routine 550A in the content delivery server of the first embodiment having been described by referring to FIG. 11. The CM insert function unit 550B includes a CM inserted content delivery routine 560 and a CM insert position list 570.

The CM insert position list 570 comprises a plurality of entries each indicating, as shown in FIG. 28, the relation between the content ID 571 and a CM insert position 572. In the CM insert position list 570, the content ID assigned to each content specified by the title ID is registered as the content ID 571, and time information indicating a time period from the start of playing each content until the CM content insert position is stored as the CM insert position 572. The entry whose CM insert position 572 is blank signifies that the content specified by the content ID 571 has no CM content to be inserted.

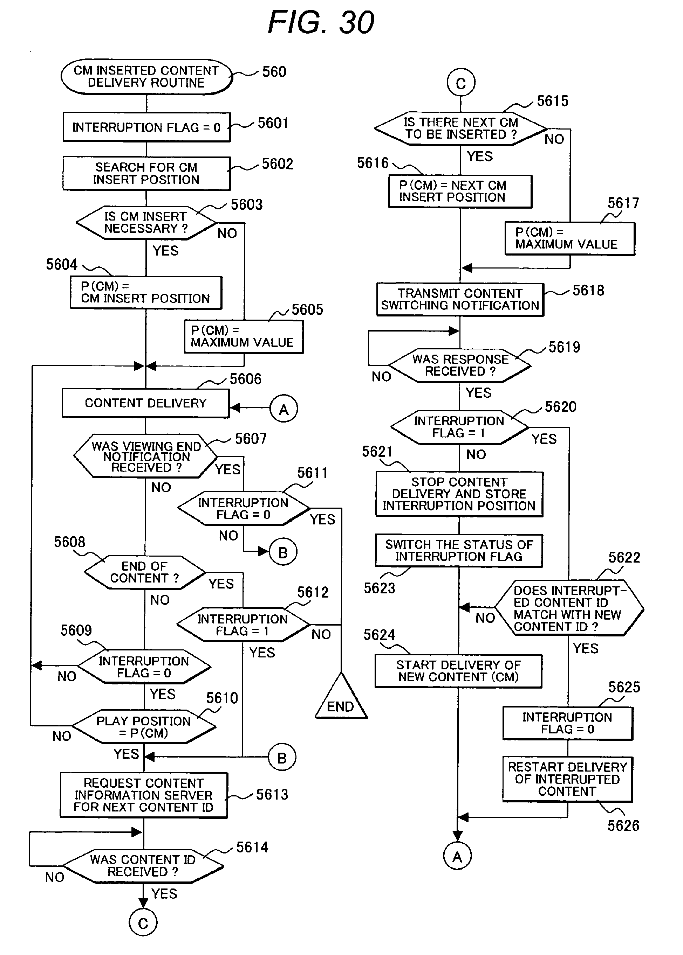

In this embodiment, the content delivery server 5 having received a viewing request from the terminal 1 performs the CM inserted content delivery routine 560 to start the delivery of the content data to the terminal, as will be described in detail by referring to FIG. 30. The CM inserted content delivery routine 560 interrupts the delivery of main stream content data at a timing specified with the CM insert position 572 indicated in the CM insert position list 570, and requests the content server 3 to notify of a content ID which indicates local CM content, for example, advertising content to be delivered next to the terminal 1.

The content delivery server 5 reads out the local CM content from the data storage 54 in accordance with the content ID notified from the content information server 3, and delivers the local CM content to the terminal 1. Upon completing the delivery of the local CM content, the content delivery server 5 requests the content information server 3 to notify a content ID of content to be delivered next, and restarts the delivery of the interrupted content to the terminal after confirming that the content ID notified from the content information server 3 matches with the ID of the interrupted content.

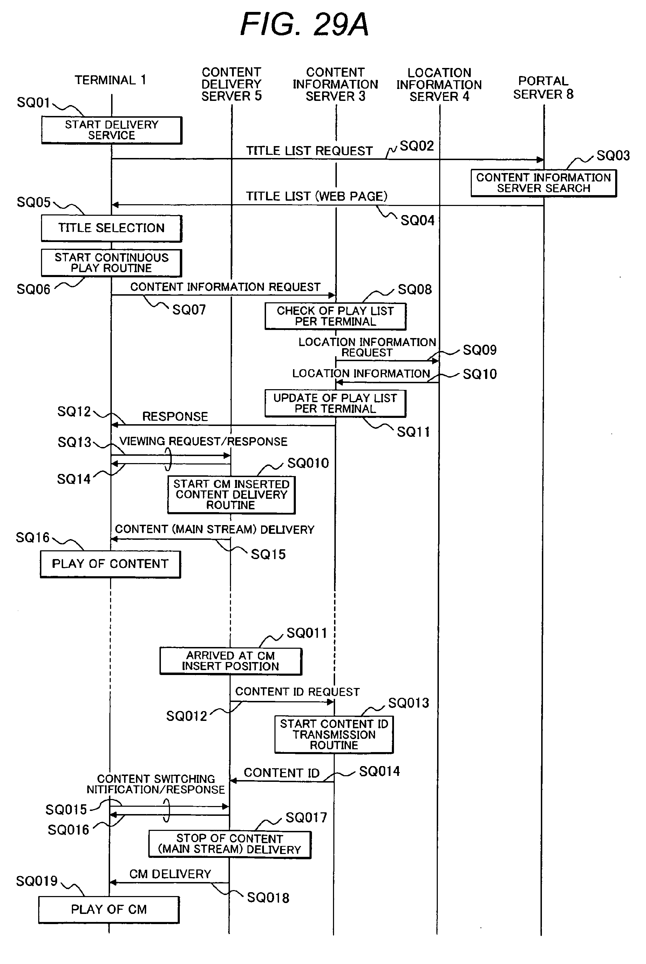

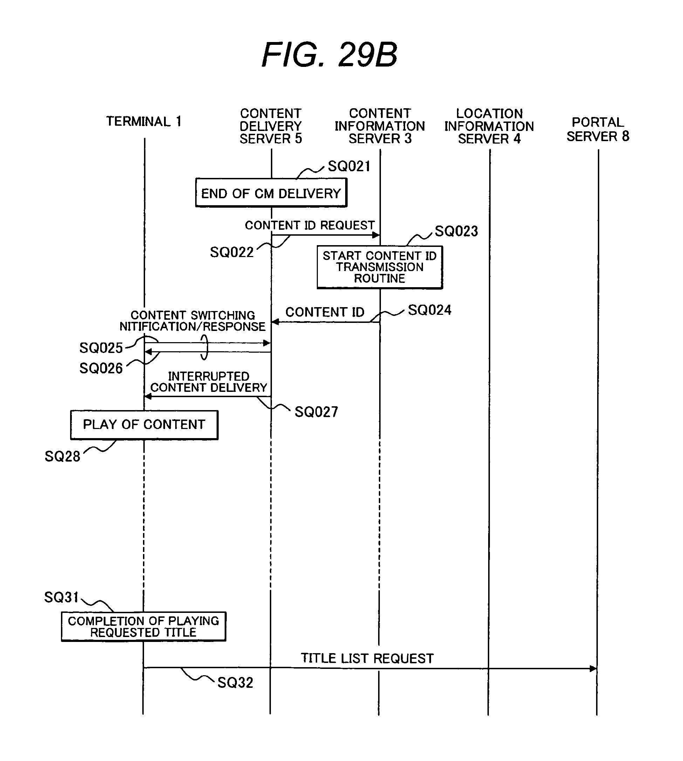

FIG. 29A and FIG. 29B are sequence charts showing the content delivery in the third embodiment. Description will be made here in the case where the terminal 1 having a terminal ID of "1111.2222.3333.4444" views the main stream content having a title ID of "Title 1". The sequence of steps SQ01 - SQ12 is the same as the sequence of the first embodiment shown in FIG. 13, and description will be omitted.

Upon receiving a viewing request message including a title ID and a terminal ID from the terminal 1 (SQ13), the processor 52 of the content delivery server 5 transmits a response message to the terminal 1, and starts the CM inserted content delivery routine 560 shown in FIG. 30 (SQ010).

In the CM inserted content delivery routine 560, the processor 52 clears the status of an interruption flag for indicating that the delivery of main stream content was interrupted to deliver a local CM (5601), searches the CM insert position list 570 for a CM insert position corresponding to the content ID designated by the viewing request message (5602), and judges the necessity of CM insertion (5603). If the CM insertion position is not specified in the CM insert position list 570, the processor 52 sets a maximum time value larger than the maximum play time of normal main stream content to a parameter P(CM) for indicating the next CM insertion position (5605), reads out the content having the content ID from the data storage 54, and starts the content delivery to the terminal 1 (5606, SQ15 of FIG. 29A). If the CM insertion position is specified in the CM insert position list 570, the processor 52 sets a time value of the first CM insertion position 572 indicated in the CM insert position list to the parameter P(CM) (5604), and starts the content delivery to the terminal 1 (5606).

During the content delivery to the terminal, the processor 52 judges whether a viewing end notification was received from the terminal 1 (5607). If the viewing end notification was not received, the processor 52 judges whether the content delivery has ended (5608). If the content delivery has not ended, the processor 52 judges the status of interruption flag (5609). If the interruption flag is "1", the processor 52 returns the sequence to step 5606 and performs the above content delivery and judging steps 5607 and 5608 repeatedly. If the interruption flag is "0", the processor 52 judges whether the play position of the main stream content has reached the CM insert position specified by the parameter P(CM) (5610). If the play position has not reached the CM insert position, the processor 52 returns the sequence to step 5606 and performs the above content delivery and judging steps 5607 and 5608 repeatedly.

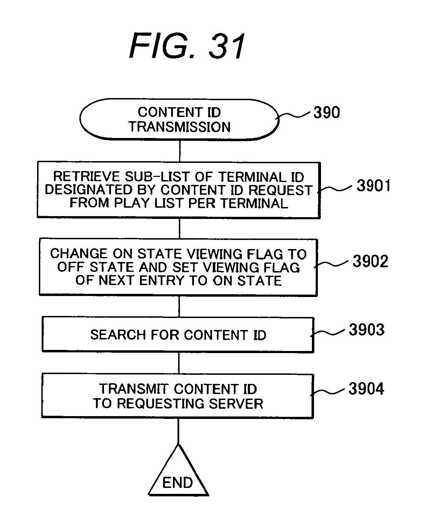

When the play position of the main stream content has reached the CM insert position (5610, SQ011 of FIG. 29A), the processor 52 transmits a content ID request message including the terminal ID to the content information server 3 (5613, SQ12 of FIG. 29A), and waits for a response message from the content information server 3 (5614). Upon receiving the content ID request message from the content delivery server 5, the processor 32 of the content information server 3 performs the content ID transmission routine 390 shown in FIG. 31 (SQ013 of FIG. 29A).

In the content ID transmission routine 390, the processor 32 searches the play list per terminal 370 shown in FIG. 26A for the sub-list 371-1 corresponding to the terminal ID specified in the content ID request message (3901), changes the ON state viewing flag in the entry E01 to OFF state, and sets the viewing flag in the next entry E02 to ON state (3902). After that, the processor 32 retrieves a content ID corresponding to the content information ID shown in the entry E02 from the data storage 34 (3903), and transmits a response message including the retrieved content ID to the content delivery server 5 (3904, SQ014 of FIG. 29A). At this time, the content delivery server 5 is notified of a local CM content ID which is specified by the content information including "content-cm1.example.com" as its content information ID.

In FIG. 30, when a response message is received from the content information server 3, the processor 52 of the content delivery server 5 judges whether the next CM insert position is specified in the CM insert position list 570 (5615 of FIG. 30). If the next CM insert position is specified, the processor 52 sets the value of next CM insert position to the parameter P(CM) (5616), otherwise the processor 52 sets the maximum time value to the parameter P(CM) (5617), and transmits a content switching notification (5618, SQ015 of FIG. 29A) to the terminal 1, and waits for a response from the terminal 1 (5619).

Upon receiving a response message from the terminal 1 (SQ016 in FIG. 29A), the processor 52 judges the status of interruption flag (5620). At this time, as the interruption flag is in a "0" state, the processor 52 stops the delivery of main stream content (SQ017 in FIG. 29A), retains the content ID and the interrupt position of interrupted content (5621), and switches the status of the interruption flag to "1" (5623). After that, the processor 52 starts the delivery of new content to the terminal (5624, 5606, SQ018 of FIG. 29A), and performs thereafter operations of the sequence beginning from step 5607 (SQ019 in FIG. 29A). The new content is local CM in this case and has a content ID specified by the response message received from the content information server 3.

When the delivery of local CM content has ended (5608 SQ021 in FIG. 29B), the processor 52 of the content delivery server 5 judges the status of interruption flag (5612). As the interruption flag is in the "1" state at this time, the processor 52 transmits a content ID request message including the terminal ID to the content information server 3 (5613, SQ022 of FIG. 29B), and waits for a response message from the content information server 3 (5614).

Upon receiving the content ID request message from the content delivery server 5, the processor 32 of the content information server 3 starts the content ID transmission routine 390 shown in FIG. 31 (SQ023 of FIG. 29B), changes the ON state viewing flag to OFF state in the sub-list 371-1 of the play list per terminal 370, and sets the viewing flag of the next entry E03 to ON state (3902). After that, the processor 32 retrieves a content ID corresponding to the content information ID of the entry E03 from the data storage 34 (3903), and transmits a response message including the content ID to the content delivery server 5 (3904, SQ024 in FIG. 29B). Because the content information ID "content-info1. example.com" of the entry E03 is common to the content information ID of the first entry E01 in the sub-list 371-1, the content ID identical to that of the interrupted main stream content is notified to the content delivery server 5.

Upon receiving the content ID from the content information server 3, the processor 52 of the content delivery server 5 updates the value of parameter P(CM) in steps 5615 - 5617 shown in FIG. 30, and transmits a content switching notification to the terminal 1 (5618, SQ025 of FIG. 29B). When a response is received from the terminal 1 (5619, SQ026 of FIG. 29B), the processor 52 judges the status of interruption flag (5620). As the interruption flag is in the "1" state at this time, the processor 52 compares the content ID specified in the response message received from the content information server 3 with the content ID of the interrupted content (5622). At this time, these two IDs match with each other. The processor 52 changes the interruption flag to "0" (5625), restarts the delivery of interrupted content (5626, SQ027 in FIG. 29B), and performs thereafter operations of the sequence beginning from step 5607 (SQ019 in FIG. 29A).

In the case where the sub-list for the requesting terminal 1 includes only one content information ID for local CM in the play list per terminal 370, as the sub-list 371-1 shown in FIG. 26A, the processor 52 terminates the CM inserted content delivery routine 560 upon detecting the end of content at step 5608 in the sequence of restarted content delivery.

When the terminal user 1 instructed to end the viewing of content being played, a viewing end notification message is transmitted from the terminal 1 to the content delivery server 5. In the CM inserted content delivery routine 560 shown in FIG. 30, the processor 52 of the content delivery server 5 detects the viewing end notification message at step 5607. Then the processor 52 checks the status of interruption flag (5611). If the interruption flag is "0", the processor 52 interprets that the terminal user has ended the viewing of main stream content, and terminates the CM inserted content delivery routine 560. In this case, if the interruption flag is "1", the processor 52 interprets that the terminal user has instructed to end the local CM, and requests the content information server 3 to send a next content ID at step 5613.

In the CM inserted content delivery routine 560, the processor 52 judges whether the content being delivered is local CM content or main stream content, based on the status of the interruption flag. Accordingly, even in the case where a plurality of content information IDs for local CM were registered in the play list per terminal 370, the processor 52 of content delivery server 5 can insert local CM content into the main stream content at the timing specified by the CM insert position list 570 by executing the CM inserted content delivery routine 560.

In the case where the play list per terminal 370 designates two content information IDs for local CM continuously, the processor 52 can judge that new content is CM at step 5622 performed when the interruption flag is "1", because a new content ID notified from the content information server does not match with the content ID of the interrupted content, and the processor 52 can start the delivery of new CM content at step 5624.

According to the sequence shown in FIG. 29A, the content delivery server 5 requests a CM content ID from the content information server 3 after detecting that the content play position has arrived at the CM insert position (SQ011). In this case, the timing of content switching is necessarily delayed from the timing Tn specified in the CM insert position list.

When the delay time from the CM insert position Tn designated by the CM insert position list 570 until the actual content switching time is represented by ?T, the delay of content switching timing can be eliminated, for example, by setting "Tn - ?T" to the parameter P(CM) at steps 5604 and 5616 in FIG. 30 so that the delivery server 5 can request the next content ID from the content information server 3 prior to the timing designated by the CM insert position list.

In order to switch the content at the time point designated by the CM insert position list 570 by setting the next CM insert position Tn to the parameter P(CM), the content delivery server 5 may request the next content ID from the content information server 3, in parallel with the content delivery after starting the delivery of new content (SQ15, SQ018) so that the communication with the content information server 3 (SQ012 - SQ014, SQ022 - SQ024) is completed before the content play position arrives at the CM insert position. In other words, in the CM inserted content delivery routine 560 shown in FIG. 30, the content delivery server 5 may complete the communication with the content information server 3 (steps 5613 - 5614) between step 5606 and step 5610.

In the embodiment described by referring to FIGS. 29A and 29B, the content delivery server 5 notifies the terminal 1 of the content switching (SQ015, SQ025), and switches the content to be delivered (SQ018, SQ027) after waiting for a response from the terminal (SQ016, SQ026). However, the content delivery server 5 may transmit to the terminal 1 an alarm message for noticing that the content viewing will be interrupted soon, when the play position of the main stream content arrived at the CM insertion position (SQ011). In this case, the content delivery server 5 can interrupt the delivery of the main stream content when a response to the alarm message is received from the terminal 1, and send a request for the next content ID to the content information server 3 (SQ012).

According to the third embodiment, management of content stored in the data storage 54 becomes easy because the content ID assigned to the main stream content is applicable to a plurality of sub-contents even when the main stream content was divided into the plurality of sub-contents due to insertion of local CM. Moreover, since the same content information ID can be used to a plurality of sub-contents, the content information server 3 can reduce the number of content information records accumulated in the data storage 34 and reduce the memory capacity of content information file 340A.

Although content delivery systems for delivering local CM content selected depending on the location of each terminal was described in the above embodiments, the present invention is also applicable to a content delivery system that delivers CM content adapted to each terminal user's attribute, by utilizing terminal information other than the terminal location, such as personal information including the gender, age and preferences of the terminal user.

In this case, a terminal information server having a function of managing terminal location information and personal information of each terminal user may be utilized instead of the location information server 4 described in the above embodiments, and the terminal location information table 400 shown in FIG. 10 may store personal information items such as the terminal user's gender, classes of age and preference in association with the terminal ID 401. Further, the content information server 3 may obtain location information of each terminal (area ID) from the position information server 4, and other terminal information from a personal information management server independent from the local information server 4.

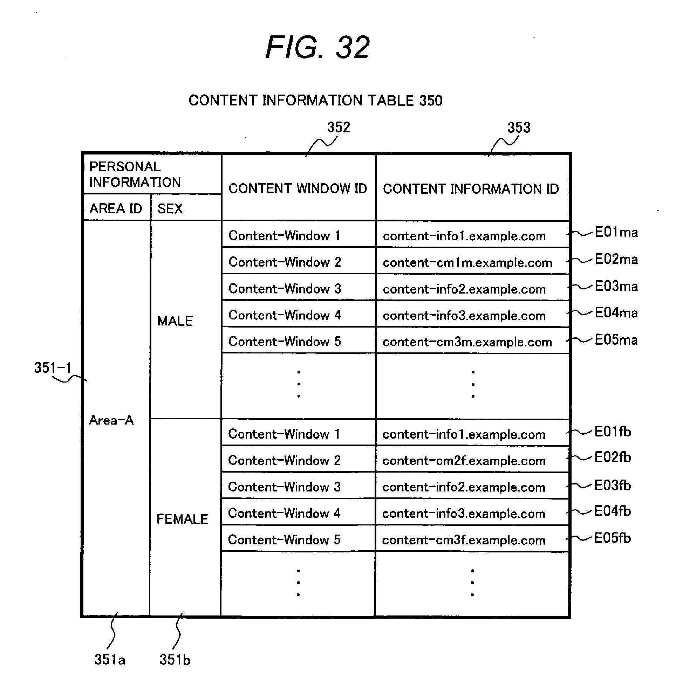

FIG. 32 shows an example of the content information table 350 to be used in the case where terminal location (area ID) 351 a and user sex (gender) 351 b are used as the terminal information. The content information table 350 shown here has a structure similar to the content information table 350 shown in FIG. 6, but the sub-table 351-1 for each area ID is divided into a sub-table for male and a sub-table for female.

As described in the first embodiment, in the case where the terminal 1 requests, for example, the content having the title ID of "Title 1" when the terminal 1 is in the area having the area ID of "Area-A", the delivery terminal 5 delivers CM inserted content to the terminal 1 according to the content information IDs indicated by the entries each having a content window ID of "Content-Window1", "Content-Window2", and "Content-Window3", respectively.

In the case of using the content information table 350 shown in FIG. 32, when the user of requesting terminal 1 is a man, a play list per terminal including content information IDs specified by the entries E01ma - E03ma is generated, and local CM content specified by the content information ID "content-cmlm.example.com" indicated in the entry E02ma is delivered to the terminal 1. If the user of the requesting terminal 1 is a woman, a play list per terminal including content information IDs specified by the entries E01fa - E03fa is generated, and local CM content specified by the content information ID "content-cmlf.example.com" indicated by entry E02fa is delivered to the terminal 1.

The content information table 350 may include terminal information items other than the sex (gender) 351 b. If the sub-table of the content information table 350 is further divided into a plurality of sub-tables per attribute in accordance with a combination of plural kinds of information items obtainable from the terminal information server 4, the content delivery server 5 can deliver CM content further optimized for each terminal user. In the case where the sex sub-table is divided, for example, into sub-tables per age class, each of male-intended advertisement and female-intended advertisement can be further divided into advertisement for young people and advertisement for mature ages, so that the advertising effect rendered by the CM content delivery is improved to a higher level. Further, by dividing the content information table 350 into sub-tables in accordance with one specific item or the combination of a plurality of items of terminal information regardless the terminal location information, it is able to deliver wide area CM content optimized to attributes of each user.

Although FIG. 1 shows a network configuration in which the content information server 3 and the content delivery server 5 are connected to the IP network N10, these servers may be connected to gateways 2a, 2b in proximity to the access network (network on the user terminal side) in order to reduce traffic passing through the core network.

In the above described embodiments, after the terminal 1 specifies a title ID from the title list having been received from the portal server 8, the delivery of main stream content and CM content is realized due to the cooperation of the terminal 1, the content information server 3 and the content delivery server 5. However, CM content delivery to the terminal 1 may be performed by the content delivery server 5, and the delivery of main stream content may be performed by the content server 9 located in the VOD service provider network. In this case, for example, the play list per title 360 (FIG. 5) provided in the content information server 3 stores an identifier (server address) of the content server 9 to be the delivery source of main stream content in association with each title ID, and a content type identifier for discriminating whether the content is main stream content or CM content in association with each content window ID. By this way, also the play list per terminal 370 as shown in FIG. 7 can store the identifier (server address) of the content server 9 in association with each terminal ID and the content type identifier for discriminating whether the content is main stream content or CM content in association with each content window ID.

Upon receiving a content information request from the terminal 1, the content information server 3 refers to the play list per title 370. If the content to be delivered next is the main stream content (sub-content), the content information server 3 replies a response message including the address of the content server 8 to the terminal 1, and if the content to be delivered is CM content, the content information server 3 replies a response message including the address of the content delivery server 5 to the terminal 1. In this case, the terminal 1 can receive the main stream content (sub-contents) from the content server 8, and the CM content from the content delivery server 5, by transmitting a viewing request to the service address specified in the response message.

In this way, in the case where the content delivery server 5 delivers only the CM content, the memory capacity of the data storage 54 can be reduced by delivering the main stream content from the content server 8 because the content delivery server 5 needs not the content information file 340A.

## Claims

1. A content delivery system comprising a content information server (3), a content delivery server (5), and a terminal information server (4) for managing terminal information, each of which is located within a communication carrier network (N1), **characterized in that:**
said content delivery server (5) is adapted to delivering (SQ25) one of main stream content and commercial message (CM) content to each terminal (1: 1a-1, 1 a-2, 1b-1) connected to said carrier network (N1) in response to a content viewing request (SQ23),
said content information server (3) comprises:
a content information table (350) for storing control information (352, 353) designating a playing order of content within a group of contents, in association with terminal information (351), the group of content including CM content, and main stream content or a plurality of sub-contents divided from the main stream content due to inserting the CM content into the main stream content; and
request processing means (330) for generating (3307) a play list per terminal (370) defining a playing order of content within a group of contents to be delivered to a content requesting terminal (1), based on terminal information of the content requesting terminal obtained from said terminal information server (4) and the control information (352, 353) stored in association with the obtained terminal information (351) in said content information table (350), and for notifying (3314) said content requesting terminal (1) of content identifiers (571) in time sequential according to said play list per terminal (370) which includes in the playing order a plurality of content information identifiers (373) each of which corresponds to the content identifier (571) of one of CM content specified by the terminal information, said main stream content and sub-contents; and
said content delivery server (5) delivers (SQ15), in accordance with the content identifier (571) designated in the viewing request (SQ13) received from said content requesting terminal (1), one of said CM content, main stream content and sub-contents to said content requesting terminal.

2. The system of claim 1, wherein each of said plurality of sub-contents divided from said main stream content has a content identifier (571) different from each other.

3. The system of claim 1, wherein:
said content information server (3) has a play list per title (360) defining a group of content window identifiers (362) in association with a title identifier (361) of the main stream content;
said content information table (350) comprises a plurality of sub-tables (351-1,351-2) associated with said terminal information (351), each of said sub-tables comprising a plurality of entries each including a content window identifier (352) and a content information identifier (353) as said control information; and
said request processing means (330) is adapted to selecting (3305) a group of content window identifiers (362) corresponding to the title identifier specified by said content requesting terminal from said play list per title (360), selecting (3306) a group of content information identifiers (353) specified by the selected group of content window identifiers (362), from one of sub-tables in said content information table (350) which is specified by the terminal information obtained from said terminal information server (4), and generating (3307) said play list per terminal (370) for said content requesting terminal based on said selected group of content information identifiers (353).

4. The system of claim 1, wherein said content requesting terminal (1) is adapted to requesting (1601, SQ07) said content information server (3) to notify a content identifier of content to be played by designating a title identifier, requesting (1604, SQ13) said content delivery server (5), by said content viewing request, to deliver content having the content identifier (571) notified from said content information server (3), and requesting (1601, SQ37) said content information server (3) to notify a next content identifier by designating said title identifier when playing of said content having been delivered from said content delivery server has ended (1608).

5. The system of claim 1, wherein:
each of said plurality of sub-contents divided from said main stream content has the same content identifier as that of the main stream content, and
said content information server (3) includes means for notifying (SQ014) said content delivery server (5) of the next content identifier in accordance with said play list per terminal (370), in response to a request (SQ012) from the content delivery server (5), and
said content delivery server (5) includes:
a CM insert position list (570) indicating an insert position (572) of CM content in association with the content identifier (571) of main stream content; and
content delivery means (560) for obtaining (561) from said content information server (3) an identifier of content to be delivered to said content requesting terminal next, interrupting (5621) the delivery of main stream content when the play position of main stream content has reached the insert position of CM content (5610) specified by the CM insert position list (570), delivering (5624) CM content having the content identifier obtained from said content information server, and restarting (5626) delivery of the interrupted main stream content when the delivery of CM content was completed.

6. The system of claim 5, wherein the content delivery means (560) of said content delivery server (5) is adapted to requesting (SQ012) said content information server (3) to notify (SQ014) a content identifier of next CM content to be delivered to said content requesting terminal while the main stream content is being delivered, requesting (SQ022) said content information server (3) to notify (SQ024) a content identifier of next content to be delivered to the requesting terminal while the CM content is being delivered; and starting delivery of new CM content or interrupted main stream content in accordance with the content identifier of next content when delivery of the CM content was completed.

7. The system of claim 5, wherein:
said content information server (3) has a play list per title (360) defining a group of content window identifiers (362) in association with a content title identifier (361);
said content information table (450) comprises a plurality of sub-tables (351-1, 351-2) associated with said terminal information (351), each of said sub-tables comprising a plurality of entries each including a content window identifier (352) and a content information identifier (353) as said control information, and each of entries corresponding to sub-contents divided from the same main stream content has the same content information identifier to each other; and
said request processing means (330) is adapted to selecting (3305) a group of content window identifiers (362) corresponding to the title identifier specified by said content requesting terminal from said play list per title (360), selecting (3306) a group of content information identifiers (353) specified by the selected group of content window identifiers (362), from one of sub-tables in said content information table (350) which is specified by the terminal information obtained from said terminal information server (4), and generating (3307) said play list per terminal (370) for the requesting terminal based on the selected group of content information identifiers (353).

8. The system of claim 1, wherein said content delivery server (5) has a data storage (54) for storing main stream content (540A) having been supplied from a server (9a, 9b) belonging to a content delivery service provider network (N2a, N2b) other than said communication carrier network (N1) and CM content having been supplied from a server (11) belonging to a CM content delivery service provider network (N3) other than the communication carrier network (N1), thereby to deliver the main stream content and CM content stored in the data storage (54) to said requesting terminal (1).

9. The system of claim 7, wherein said content information server (3) is adapted to receiving data for said play list per title (360) from a server (8a,8b,9a,9b) belonging to a content delivery service provider network (N2a, N2b) other than said communication carrier network (N1).

10. The system of claim 1, wherein said content information server (3) is adapted to receiving the correspondence of content information identifier to a content identifier of said main stream content or said sub-content from a server (8a,8b,9a,9b) belonging to a content delivery service provider network (N2a, N2b) other than said communication carrier network (N1), and receiving the correspondence of content information identifier to a content identifier of said CM content from a server (11) belonging to a CM content delivery service provider network (N3) other than said communication carrier network (N1).

11. The system of claim 1, wherein each of said terminals is adopted to selecting (SQ05) a title of content from a Web screen offered from a portal server (8a, 8b) belonging to said content delivery service provider network (N2a, N2b, and requesting (SQ07) said content information server (3) to notify a content identifier by designating the selected title, thereby to transmit (SQ12) said viewing request including the content identifier to said content delivery server.

12. The system of claim 11, wherein said content information server (3) is adapted to obtain terminal information of said requesting terminal from said terminal information server (4), according to a request (SQ004) from said portal server (8).

13. The system of claim 1, wherein said terminal information server (4) is adapted to notifying said content information server (3) of location information (SQ10) of said requesting terminal as said terminal information so that CM content different depending on the current location of said requesting terminal is delivered from said content delivery server (5) to said requesting terminal (1).

14. A content information server (3) located within a communication carrier network (N1) including a content delivery server (5) and a terminal information server (4) for managing terminal information, comprising:
a content information table (350) for storing control information (352, 353) designating a playing order of content within a group of contents, in association with terminal information (351), the group of content including CM content, and main stream content or a plurality of sub-contents divided from the main stream content due to inserting the CM content into the main stream content; and
request processing means (330) for generating a play list per terminal (370) defining a playing order of content within a group of contents to be delivered to a content requesting terminal, based on terminal information of the content requesting terminal (1) obtained from said terminal information server (4) and the control information (352, 353) stored in association with the obtained terminal information (351) in said content information table (350), and for notifying a content requesting terminal of content identifiers in time sequential according to said play list per terminal (370) which includes in the playing order a plurality of content information identifiers (373) each of which corresponds to the content identifier (571) of one of CM content specified by the terminal information, said main stream content and sub-contents,
wherein said content delivery server (5) delivers, in accordance with the content identifier designated in a viewing request received from said content requesting terminal (1), one of said CM content, main stream content and sub-contents to said content requesting terminal.

15. The server of claim 14, further comprising a play list per title (360) defining a group of content window identifiers (362) in association with a title identifier (361) of the main stream content, wherein
said content information table (450) comprises a plurality of sub-tables (351-1, 351-2) associated with said terminal information (351), each of said sub-tables comprising a plurality of entries each including a content window identifier (362) and a content information identifier (353) as said control information, and
said request processing means (330) is adapted to selecting (3305) a group of content window identifiers (362) corresponding to the title identifier specified by said content requesting terminal from said play list per title (360), selecting (3306) a group of content information identifiers (353) specified by the selected group of content window identifiers (362), from one of sub-tables in said content information table (350) which is specified by the terminal information obtained from said terminal information server (4), and generating (3307) said play list per terminal (370) for said content requesting terminal based on said selected group of content information identifiers (353).
